(19) Europäisches Patentamt
European Patent Office
Office européen des brevets

(11) EP 2 366 733 B1

(12) **EUROPEAN PATENT SPECIFICATION**

(45) Date of publication and mention of the grant of the patent:
**22.10.2014 Bulletin 2014/43**

(51) Int Cl.:
***C08K 5/098*** (2006.01) ***C08K 5/42*** (2006.01)

(21) Application number: **10173039.8**

(22) Date of filing: **26.09.2006**

(54) **Curable composition improved in curability and storage stability**

Härtbare Zusammensetzung, mit verbesserter Härtbarkeit und Lagerungsstabilität

Composition durcissable dont le durcissement et la stabilité au stockage sont améliorés

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.09.2005 JP 2005289014**
**30.09.2005 JP 2005289017**
**30.09.2005 JP 2005289018**

(43) Date of publication of application:
**21.09.2011 Bulletin 2011/38**

(62) Document number(s) of the earlier application(s) in accordance with Art. 76 EPC:
**06798340.3 / 1 942 153**

(73) Proprietor: **KANEKA CORPORATION**
**Osaka (JP)**

(72) Inventors:
- **Okamoto, Toshihiko**
**Hyogo 676-8688 (JP)**
- **Wakabayashi, Katsuyu**
**Osaka 566-0072 (JP)**

(74) Representative: **HOFFMANN EITLE**
**Patent- und Rechtsanwälte**
**Arabellastrasse 4**
**81925 München (DE)**

(56) References cited:
**EP-A1- 1 471 113** **EP-A1- 1 550 701**
**EP-A1- 1 624 027**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 366 733 B1

## Description

TECHNICAL FIELD

The present invention relates to a curable composition.

BACKGROUND ART

It has been known that an organic polymer comprising at least one reactive silicon-containing group in one molecule has a property of crosslinking by forming a siloxane bond accompanied with, for example, hydrolysis of a reactive silicon group due to water etc. at a room temperature and accordingly giving a rubber-like cured product.
With respect to the reactive silicon group-containing organic polymer, an organic polymer having a polyoxyalkylene or polyisobutylene main chain skeleton is disclosed in Patent Documents 1 and 2 and the like and has already been produced industrially and used widely for uses as a sealant, an adhesive, paint and the like.
The curable composition comprising a reactive silyl group-containing organic polymer is cured using a silanol condensation catalyst and an organotin catalyst having a carbon-tin bond, such as dibutyltin bis(acetylacetonate), is widely used in the case of the one-pack curable composition. However, recently, the toxicity of the organotin compound is pointed out.
On the other hand, as described in Patent Document 3, Patent Document 4, Patent Document 5, and Patent Document 6, a stannous carboxylate is used as a curing catalyst other than organotin catalysts. Use of the stannous carboxylate gives a cured product with improved recovery and creep resistance. Patent Documents 7, Patent Document 8, Patent Document 9, Patent Document 10, Patent Document 11, Patent Document 12, Patent Document 13, Patent Document 14, Patent Document 15, and Patent Document 16 disclose techniques of using various kinds of carboxylic acid metal salts or carboxylic acids as a silanol condensation catalyst.
Patent Document 17, Patent Document 18 and Patent Document 19 describe the technology of improving the storage stability of those reactive sill group-containing organic polymers by using such a non-phthalate plasticizer as polypropylene glycol.
However, it was confirmed that when a carboxylic acid metal salt or a carboxylic acid is used as a silanol condensation catalyst and, further, polypropylene glycol is used as a plasticizer, such problems arise as a reduction in catalytic activity and a slow curing rate before storage.
On the other hand, when a carboxylic acid ester is used as a plasticizer in a curable composition containing a carboxylic acid metal salt or a carboxylic acid, the curing rate before storage is rapid but another problem arises, namely the curing rate becomes slow during storage.

Patent Document 1: Japanese Kokai Publication Sho-52-73998
Patent Document 2: Japanese Kokai Publication Sho-63-6041
Patent Document 3: Japanese Kokai Publication Sho-55-9669
Patent Document 4: Japanese Patent No. 3062626
Patent Document 5: Japanese Kokai Publication Hei-6-322251
Patent Document 6: Japanese Kokai Publication 2002-285018
Patent Document 7: Japanese Kokai Publication Hei-5-117519
Patent Document 8: Japanese Kokai Publication Hei-8-41358
Patent Document 9: Japanese Kokai Publication Hei-5-39428
Patent Document 10: Japanese Kokai Publication 2001-342363
Patent Document 11: Japanese Kokai Publication 2000-313814
Patent Document 12: Japanese Kokai Publication 2003-147220
Patent Document 13: Japanese Kokai Publication 2003-206410
Patent Document 14: International Publication WO04/031299
Patent Document 15: International Publication WO04/031300
Patent Document 16: International Publication WO04/099318
Patent Document 17: Japanese Kokai Publication 2000-345054
Patent Document 18: U.S. Patent No. 6410640
Patent Document 19: International Publication WO00/056817

SUMMARY OF THE INVENTION

The subject-matter of the present invention is defined in attached claims 1-9.
It is an object of the present invention to provide a curable composition which comprises, as a principal component, an organic polymer containing a silicon-containing group capable of crosslinking under formation of a siloxane bond and in which a non-organotin catalyst is used to attain both good curability and good storage stability simultaneously.

The present inventors made intensive investigations to solve such problems as mentioned above and, as a result, found that when a carboxylic acid metal salt and/or carboxylic acid (B) is used as a silanol condensation catalyst for the polymer mentioned above and, further, an organic sulfonic acid ester (C) is used as a plasticizer therefor, a curable composition having good curability and, in addition, showing no retarded curing during storage can be obtained. They further found that when, in such an organotin-free one-pack curable composition containing a carboxylic acid metal salt and/or carboxylic acid (B) used as a silanol condensation catalyst, the moisture content therein is reduced to 2,000 ppm or a lower level and, further, a carboxylic acid ester (D) as a plasticizer is used in combination with a compound (E) containing an imino group and containing no $-NH_2$ group nor siiicon-containing group capable of crosslinking under siloxane bond formation (hereinafter such compound is referred to also as "secondary amine")as a silanol condensation cocatalyst or promoter, a one-pack curable composition having good curability and good adhesion properties and further having good storage stability without showing curing retardation even after storage can be obtained. Furthermore, they found that when, in such an organotin-free one-pack curable composition containing a carboxylic acid ester (D) used as a plasticizer and a carboxylic acid metal salt and/or carboxylic acid (B) as a silanol condensation catalyst, the moisture content therein is reduced to 2,000 ppm or a lower level and, further, the ratio of the total number of moles (b) of the carbonyl group composing the acid group in the component (B) to the total number of moles (d) of the carbonyl group in the component (D) in the composition, namely the ratio (b/d), has a specific value, a one-pack curable composition having good curability and, in addition, good storage stability without showing any tendency toward retardation of curing even after storage can be obtained.

Herein described is

one of the following composition (1) to (3):

(1) a curable composition
which comprises

(A) an organic polymer having a silicon-containing group capable of crosslinking under siloxane bond formation, and
(B) a carboxylic acid metal salt (b1) and/or a carboxylic acid (b2), and
which further comprises:
(C) an organic sulfonic acid ester represented by the general formula (1):

$$R^1SO_3R^2 \qquad (1)$$

(wherein $R^1$ and $R^2$ each independently represents a substituted or unsubstituted hydrocarbon group);
(2) an organotin-free one-pack curable composition which comprises (A) and (B), and
which further comprises

(D) a carboxylic acid ester and
(E) a compound containing an imino group and containing no $-NH_2$ group nor silicon-containing group capable of crosslinking under siloxane bond formation and

that the moisture content in the composition is not higher than 2,000 ppm; or
(3) an organotin-free one-pack curable composition which comprises (A) and (B), and
which further comprises

(D) a carboxylic acid ester,

that the moisture content in the composition is not higher than 2,000 ppm and
that the ratio of the total number of moles (b) of the carbonyl group composing the acid group in the component (B) to the total number of moles (d) of the carbonyl group in the component (D) in the composition, namely the ratio (bis), is not lower than 0.07.

Preferably, the component (B) contains either of the carboxylic acid metal salt (b1) or the carboxylic acid (b2).

Preferably, the component (B) contains both of the carboxylic acid metal salt (b1) and the carboxylic acid (b2).

Preferably, the carboxylic acid metal salt (b1) is a metal salt of a carboxylic acid of which the carbon atom adjacent to the carbonyl group composing an acid group is a tertiary carbon or a quaternary carbon.

Preferably, the carboxylic acid (b2) is the carboxylic acid of which the carbon atom adjacent to the carbonyl group composing an acid group is a tertiary carbon or a quaternary carbon.
Preferably, the main chain skeleton of the organic polymer (A) is a polyoxyalkylene polymer.
Preferably, $R^1$ in general formula (1) is a substituted or unsubstituted alkyl group containing 1 to 40 carbon atoms.
Preferably, $R^2$ in general formula (1) is a substituted or unsubstituted aryl group containing 6 to 40 carbon atoms.
Preferably, each modification of composition further contains an amine compound as the component (F).
Preferably, the curable composition (1) comprising (A), (B) and (C), as mentioned above, constitutes a one-pack curable composition.
Preferably, it further contains an amino group-containing silane coupling agent as the component (G).
Preferably, the carboxylic acid ester (D) is a phthalic acid ester.
Preferably, the component (E) is a compound represented by the general formula (2):

$$R^3NHR^4 \qquad (2)$$

(wherein $R^3$ and $R^4$ each independently represents a substituted or unsubstituted hydrocarbon group containing 1 to 40 carbon atoms or $R^3$ and $R^4$ may be linked together to form a ring system.
Preferably, the amine compound is one containing, as a substituent, a hydrocarbon group having at least one hetero atom.
More preferably, the amine compound is one containing a hydrocarbon group having a hetero atom on the 2- to 4-position carbon atom.
Herein is further described
a method of improving the storage stability of a curable composition, more specifically an organotin-free one-pack curable composition comprising

(A) an organic polymer having a silicon-containing group capable of crosslinking under siloxane bond formation,
(B) a carboxylic acid metal salt (b1) and/or a carboxylic acid (b2), and
(D) a carboxylic acid ester,and

which comprises
the step of reducing the moisture content in the composition to a level not higher than 2,000 ppm and
the step of adjusting the ratio of the total number of moles (b) of the carbonyl group composing the acid group in the component (B) to the total number of moles (d) of the carbonyl group in the component (D) in the composition, namely the ratio (b/d), to a level not lower than 0.07.

DETAILED DESCRIPTION OF THE INVENTION

(First aspect)

In the first aspect, it is described
a curable composition
which comprises

(A) an organic polymer having a silicon-containing group capable of crosslinking under siloxane bond formation, and
(B) a carboxylic acid metal salt (b1) and/or a carboxylic acid (b2), and
which further contain:
(C) an organic sulfonic acid ester represented by the general formula (1):

$$R^1SO_3R^2 \qquad (1)$$

(wherein $R^1$ and $R^2$ each independently represents a substituted or unsubstituted hydrocarbon group.)

<Component (A): organic polymer having a silicon-containing group capable of crosslinking under siloxane bond formations

The main chain skeleton or the organic polymer having a silicon-containing group capable of crosslinking under siloxane bond formation, which is to be used in accordance with the first aspect, is not particularly restricted but may be any of various main chain skeletons.

In particular, there may be mentioned polyoxyalkylene polymers such as polyoxyethylene, polyoxypropylene, polyoxybylene, polyoxytetramethylene, polyoxyethylene-polyoxypropylene copolymer, and polyoxypropylene-polyoxybutylene copolymer; hydrocarbon polymers such as ethylene-propylene copolymer, polyisobutylene, isobutylene-isoprene and the like copolymer, polychloroprene, polyisoprene, copolymer of isoprene or butadiene with acrylonitrile and/or styrene etc., polybutadiene, copolymer of isoprene or butadiene with acrylonitrile and styrene etc., and hydrogenated polyolefin copolymers obtained by hydrogenation of these polyolefin polymers; polyester polymers such as condensation polymers of dibasic acid such as adipic acid and glycol and ring-opening polymers of lactones; (meth) acrylic ester polymers obtained by radical polymerization of monomers such as ethyl (meth) acrylate and butyl (meth)acrylate etc.; vinyl polymers obtained by radical polymerization of monomers such as (meth) acrylic ester monomers, vinyl acetate, acrylonitrile and styrene etc.; graft polymers obtained by polymerization of vinyl monomers in the above-mentioned organic polymers; polysulfide polymers; polyamide polymers such as nylon 6 obtained by ring opening polymerization of ε-caprolactam, nylon 6,6 obtained by condensation polymerization of hexamethylenediamine and adipic acid, nylon 6, 10 obtained by condensation polymerization of hexamethylenediamine and sebacic acid, nylon 11 obtained by condensation polymerization of ε-aminoundecanoic acid, nylon 12 obtained by ring-opening polymerization of ε-aminolaurolactam, and copolymer nylon comprising two or more components of the above-mentioned nylons; polycarbonates produced by condensation polymerization of bisphenol A and carbonyl chloride etc.; diallyl phthalate polymers; and the like.

Saturated hydrocarbon polymers such as polyisobutylene, hydrogenated polyisoprene, and hydrogenated polybutadiene, polyoxyalkylene polymers, and (meth) acrylic ester polymers are more preferable since they have relatively low glass transition temperature and give cured products excellent in cold resistance.

The glass transition temperature of the organic polymer as the component (A) is not particularly limited, however it is preferably 20°C or lower, more preferably 0°C or lower, and further preferably -20°C or lower. If the glass transition temperature exceeds 20°C, the viscosity is higher in winter and in a cold area and the workability may be worsened in some cases and the cured product may be deteriorated in flexibility and elongation in some cases. The glass transition temperature is a value measured by DSC measurement.

Also, polyoxyalkylene polymers and (meth)acrylic ester polymers are particularly preferable since they have high moisture permeability and give excellent deep part curability and adhesion in the case where they are used for a one-pack composition and polyoxyalkylene polymers are most preferable.

The silicon-containing group capable of crosslinking under siloxane bond formation to be contained in the organic polymer having a silicon-containing group capable of crosslinking under siloxane bond formation is a group having a hydroxyl or hydrolysable group bonded to a silicon atom and capable of crosslinking by forming a siloxane bond by reaction accelerated by a silanol condensation catalyst. The silicon-containing group capable of crosslinking under siloxane bond formation may include a group represented by the general formula (3):

$$-SiR^5_{3-a}X_a \qquad (3)$$

(wherein $R^5$ independently represents an allyl group having 1 to 20 carbon atoms, an aryl group having 6 to 20 carbon atoms, an aralkyl group having 7 to 20 carbon atoms, or a triorganosiloxy group defined as $(R')_3SiO-$ (respective substituents R' are independently a substituted or unsubstituted hydrocarbon group having 1 to 20 carbon atoms); respective substituents X independently represent a hydroxyl or hydrolysable group; when there are two or more Xs, they may be the same or different; a denotes 0, 1, 2, or 3).

The hydrolysable group is not particularly limited and may include any conventionally known hydrolysable group. In particular, examples include a hydrogen atom, a halogen atom, an alkoxy, acyloxy, ketoxymate, amino, amido, acid amido, aminoxy, mercapto, alkenyloxy, and the like groups, Among them, a hydrogen atom, an alkoxy, acyloxy, keoxymate, amino, amido, aminoxy, mercapto, and alkenyloxy groups are preferable and in terms of moderate hydrolysability and handling easiness, an alkoxy group is particularly preferable.

One to three hydrolysable groups and hydroxyl groups may be bonded to one silicon atom, and two or three of those groups may be preferably bonded to one silicon atom from the curability viewpoint. In the case where two or more hydrolysable groups and hydroxyl groups are bonded to a silicon atom, they may be same or different. Silicon-containing groups having three hydroxyl and/or hydrolyzable groups on the silicon atom and capable of crosslinking under siloxane bond formation are preferred since, when they are used, high activity and good curability can be attained and, further, the resulting cured products are excellent in recovery, durability and creep resistance. On the other hand, silicon-containing groups having two hydroxyl and/or hydrolyzable groups on the silicon atom and capable of crosslinking under siloxane bond formation are preferred from the viewpoint that good storage stability can be attained and that the cured products obtained show high elongation and high strength.

Specific examples of $R^5$ in the above-mentioned general formula (3) are alkyl groups such as methyl group and ethyl group; cycloalkyl groups such as cyclohexyl group; aryl groups such as phenyl group; aralkyl groups such as benzyl group; and triorganosiloxy groups defined as $(R')_3SiO-$ (wherein R' denotes methyl, phenyl, or the like group).

Among them, methyl group is particularly preferable.

Specific examples of the silicon-containing group capable of crosslinking under siloxane bond formation include trimethoxysilyl group, triethoxysilyl group, triisopropoxysilyl group, dimethoxymethylsilyl group, diethoxymethylsilyl group, and diisopropoxymethylsilyl group. Trimethoxysilyl group, triethoxysilyl group, and dimethoxymethylsilyl group are preferable, and trimethoxysilyl group is particularly preferable, since high activity and good curability can be obtained. From a viewpoint of storage stability, dimethoxymethylsilyl group is particularly preferable. Triethoxysilyl group and diethoxymethylsilyl group are particularly preferable since the alcohol to be produced by hydrolysis of the silicon-containing group capable of crosslinking under siloxane bond formation is ethanol and thus it is more safe.

Introduction of the silicon-containing group capable of crosslinking under siloxane bond formation may be carried out by a conventionally known method. That is, the following methods may be employed.

(A) An organic polymer having an unsaturated group is obtained by causing reaction of an organic polymer having a functional group such as a hydroxyl group in a molecule with an organic compound having an active group reactive on the functional group and an unsaturated group. Alternatively, the organic polymer having an unsaturated group is obtained by copolymerization with an unsaturated group-containing epoxy compound. Successively, hydrosilylation is carried out by causing reaction of a hydrosilane having a silicon-containing group capable of crosslinking under siloxane bond formation on the obtained reaction product.

(B) A compound having a mercapto group and a silicon-containing group capable of crosslinking under siloxane bond formation is reacted with the organic polymer having an unsaturated group obtained in the same manner as the method (A).

(C) An organic polymer having a functional group such as a hydroxyl group, an epoxy group, and an isocyanate group in a molecule is reacted with a compound having a functional group reactive on the functional group and a silicon-containing group capable of crosslinking under siloxane bond formation.

The method described as the method (A) and the method of causing reaction of a polymer having a terminal hydroxyl group and a compound having an isocyanate group and a silicon-containing group capable of crosslinking under siloxane bond formation in the method (C) are preferable among the above-exemplified methods since they are suitable of achieving high conversion efficiency in a relatively short reaction time. The organic polymer having a silicon-containing group capable of crosslinking under siloxane bond formation obtained by the method (A) can give a cu-abie composition with lower viscosity and better workability than the organic polymer obtained by the method (C) and the organic polymer obtained by the method (B) has strong odor due to the mercaptosilane and accordingly, the method (A) is particularly preferable.

Specific examples of the hydroxysilane compound to be used in the method (A) include halogenated silanes such as trichlorosilane, methyldichlorosilane, dimethylchlorosilane, and phenyldichlorosilane; alkoxysilanes such as trimethoxysilane, triethoxysilane, methyldiethoxysilane, methyldimethoxysilane, phenyldimethoxysilane and 1-[2-(trimethoxysilyl)ethyl]-1,1,3,3-tetramethyldisiloxane; acyloxysialnes such as methyldiacetoxysilane and phenyldiacetoxysilane; ketoximatosilanes such as bis(drmethylketoximato)methylsilane and bis(cyclohexylketoximato)methylsilane; and the like, but the examples thereof are not limited to them. Among them, halogenated silanes and alkoxysilanes are preferable and alkoxysilanes are particularly preferable since the curable composition to be obtained has moderate hydrolysability and is easy to handle. Among the alkoxysilanes, methyldimethylsilane is particularly preferable since it is easily available and the curable composition comprising the organic polymer to be obtained therefrom is excellent in the curability, storage stability, elongation property, and tensile strength. Trimethoxysilane is particularly preferable from the viewpoint of excellent curability and recovery of the cured product to be obtained.

As the synthesis method (B), there may be mentioned, for example, a method of introducing a compound having a mercapto group and a silicon-containing group capable of crosslinking under siloxane bond formation into an unsaturated bond site of an organic compound by radical addition reaction in the presence of a radical initiator and/or a radical generation source, however it is not particularly limited. Specific examples of the compound having a mercapto group and a silicon-containing group capable of crosslinking under siloxane bond formation include y-mercaptopropyltrimethoxysilaúe, γ -mercaptopropylmethyldimethoxysilane, γ -mercaptopropyltriethoxysilane, γ-mercaptopropylmethyldiethoxysilane, mercaptomethyltrimethoxysilane, mercaptomethyl triethoxysilane and the like, but are not limited to them.

A method for causing reaction of a polymer having a terminal hydroxyl group and a compound having an isocyanate group and a silicon-containing group capable of crosslinking under siloxane bond formation as the synthesis method maw be, for example, the method disclosed in the Japanese Kokai Publication Hei-3-47825, however the method is not particularly limited. Specific examples of the compound having an isocyanate group and a silicon-containing group capable of crosslinking under siloxane bond formation include γ -isocyanatopropyltrimethoxysilane, γ-isocyanatopropylmethyldimethoxysilane, γ -isocyanatopropyltriethaxysilane, γ -isocyanatopropylmethyldiethoxysilane, isocyanatomethyltrimethoxysilane, isocyanatomethyltriethoxysilane, isocyanatomethyldimethoxymethylsilane, isocyanatomethyldiethoxymethylsilane and the like, but are not limited to them.

In the case of using a silane compound such as trimethoxysilane having three hydrolysable groups bonded to one silicon atom, disproportionation reaction is sometimes promoted. If the disproportionation reaction is promoted, a rather harmful compound such as dimethoxysilane and tetrahydrosilane is generated. However in the case of using γ-mercaptopropyltrimethoxysilane or γ-isocyanatopropyltrimethoxysilane, such disproportionation reaction is not promoted. Therefore, the synthesis method (B) or (C) is preferablly employed in the case where a group such as trimethoxysilyl having three hydrolysable groups bonded to one silicon atom is used as the silicon-containing group.

On the other hand, the silane compound represented by the general formula (4):

$$H\text{-}(SiR^6 2O)_m SiR^6{}_2 R^7\text{-}SiX_3 \qquad (4)$$

[wherein X is as defined above, the (2 x m + 2) $R^6$ groups each independently is a hydrocarbon group or a triorganosiloxy group represented by $-OSi(R'')_3$ (in which each R" independently is a substituted or unsubstituted hydrocarbon group containing 1 to 20 carbon atoms), preferably a hydrocarbon group containing 1 to 20 carbon atoms from the availability and cost viewpoint, more preferably a hydrocarbon group containing 1 to 8 carbon atoms, particularly preferably a hydrocarbon group containing 1 to 4 carbon atoms, $R^7$ is a divalent organic group, preferably a divalent hydrocarbon group containing 1 to 12 carbon atoms from the availability and cost viewpoint, more preferably a divalent hydrocarbon group containing 2 to 8 carbon atoms, particularly preferably a divalent hydrocarbon group containing 2 carbon atoms, and m is an integer of 0 to 19, preferably 1 from the availability and cost viewpoint] do not undergo disproportionation. Therefore, the use of a silane compound represented by the general formula (4) is preferred in introducing a group containing a silicon atom with three hydrolyzable groups bound thereto according to the synthetic method (A). Specific examples of the silane compound represented by the general formula (4) are 1-[2-(trimethoxysilyl)ethyl]-1,1,3,3-tetramethyldisiloxane, 1-[2-(trimethoxysilyl)propyl]-1,1,3,3-tetramethyldisiloxane, and 1-[2-(trimethoxysilyl)hexyl]-1,1,3,3-tetramethyldisiloxane.

The organic polymer having a silicon-containing group capable of crosslinking under siloxane bond formation may have a linear or branched structure and the polymer has preferably a number average molecular weight on the basis of conversion into polystyrene by GPC in a range from 500 to 100,000, more preferably in a range from 1,000 to 50,000, and further preferably in a range from 3,000 to 30,000. If the number average molecular weight is lower than 500, the cured product tends to be undesirable in terms of the elongation property of the cured product and if it exceeds 100,000, the workability tends to become undesirable because of high viscosity.

To obtain a rubber-like cured product with high strength, high elongation and low modulus of elasticity, the number of silicon-containing groups capable of crosslinking under siloxane bond formation contained per one molecule of the organic polymer is at least one and more preferably 1.1 to 5 on average. If the number of silicon-containing groups capable of crosslinking under siloxane bond formation contained in a molecule on average is lower than 1, the curability becomes insufficient and it becomes difficult to obtain good rubber elastic behavior. The silicon-containing group capable of crosslinking under siloxane bond formation may be at either a terminus of the main chain or a terminus of a side chain of the organic polymer molecular chain or both. Particularly, in the case where the silicon-containing group capable of crosslinking under siloxane bond formation exists at a terminus of the main chain of the molecular chain, the effective mesh length of the organic polymer component contained in the cured product to be obtained finally is lengthened and it makes easy to obtain the rubber-like cured product having high strength, high elongation, and low modulus of elasticity.

The above-mentioned polyoxyalkylene polymer is substantially a polymer containing of a repeating unit represented by the general formula (5):

$$-R^8\text{-}O\text{-} \qquad (5)$$

(wherein $R^8$ represents a linear or branched alkylene group having 1 to 14 carbon atoms) and $R^8$ in the general formula (5) is a linear or branched alkylene group having preferably 1 to 14 carbon atoms and more preferably 2 to 4 carbon atoms. Specific examples of the repeating unit represented by the general formula (5) are as follows; $-CH_2O-$, $-CH_2CH_2O-$, $-CH_2CH(CH_3)O-$, $-CH_2CH(CH_2CH_5)O-$, $-CH_2C(CH_3)_2O-$, $-CH_2CH_2CH_2CH_2O-$, and the like. The main chain skeleton of the polyoxyalkylene polymer may contain only one kind of repeating unit or two or more kinds of repeating units. Particularly, in the case of using it for a sealant etc., a polymer containing a propylene oxide polymer as a main component is preferable since it is amorphous and has a relatively low viscosity.

A synthesis method of the polyoxyalkylene polymer may include, for example, a polymerization method using an alkaline catalyst such as KOH, a polymerization method using a transition metal compound-porphyrin complex catalyst obtained by causing reaction of an organic aluminum compound and porphyrin as described in Japanese Kokai Publication Sho-61-215623, a polymerization method using a composite metal cyanide complex catalyst disclosed in Japanese Kokoku Publication Sho-46-27250, Japanese Kokoku Publication Sho-59-15336, U.S. Patent No. 3,278,457, U.S. Patent No. 3,278,458, U.S. Patent No. 3,278,459, U.S. Patent No. 3, 427,256, U.S. Patent No. 3,427,334, and U.S. Patent No. 3,427,335 etc., a polymerization method using a catalyst containing a polyphosphazene salt exemplified in Japanese

Kokai Publication Hei-10-273512 , and a polymerization method using a catalyst containing a phosphazene compound exemplified in Japanese Kokai Publication Hei-11-060722, however it is not limited to these examples.

A production method of a polyoxyalkylene polymer having a silicon-containing group capable of crosslinking under siloxane bond formation may include those proposed in Japanese Kokoku Publication Sho-45-36319, Japanese Kokoku Publication Sho-46-12154, Japanese Kokai Publication Sho-50-156599, Japanese Kokai Publication Sho-54-6096, Japanese Kokai Publication sho-55-13767, Japanese Kokai Publication Sho-55-13468, Japanese Kokai Publication Sho-57-164123, Japanese Kokoku Publication Hei-3-2450, U.S. Patent No. 3,632,557, U.S. Patent No. 4,345,053, U.S. Patent No. 4,366,307, and U. S. Patent No. 4,960,844 etc., and also polyoxyalkylene polymers having a number average molecular weight of 6, 00 or higher and a Mw/Mn ratio of 1.6 or lower and thus having high molecular weight and narrow molecular weight distribution as described in Japanese Kokai Publication Sho-61-197631, Japanese Kokai Publication Sho-61-215622, Japanese Kokai. Publication Sho-61-215623, Japanese Kokai Publication Sho-61-218632, Japanese Kokai Publication Hei-3-72527, Japanese Kokai Publication Hei-3-47825, and Japanese Kokai Publication Hei-8-231707 can be exemplified, but not limited to these examples.

The above-mentioned polyoxyalkylene polymers having a silicon-containing group capable of crosslinking under siloxane bond formation may be used each alone or two or more of them may be used in combination.

The above-mentioned saturated hydrocarbon polymer is a polymer substantially having no unsaturated carbon-carbon, bond other than aromatic ring and the polymer forming its skeleton may be obtained by (1) polymerizing, as a main monomer, anolefin compound having 2 to 6 carbon atoms such as ethylene, propylene, 1-butene, and isobutylene or (2) homopolymerizing a diene compound such as butadiene and isoprene and/or copolymerizing the above-mentioned olefin compound and successively hydrogenating the homopolymer or copolymer. An isobutylene polymer and a hydrogenated polybutadiene polymer are preferable since they are easy to be introduced with a functional group into a terminus thereof and be controled in the molecular weight, and they have possibility to have a large number of terminal functional groups, and an isobutylene polymer is particularly preferable.

Those having a saturated hydrocarbon polymer as a main skeleton are excellent in heat resistance, weather resistance, durability and moisture-shutting property.

The isobutylene polymer may consist of solely isobutylene unit for all monomer units and may be a copolymer of isobutylene unit and another monomer, however in terms of the rubber property, the polymer is preferable to consist of 50% by weight or more, more preferable to consist of 80% by weight or more, and further preferable to consist of 90 to 99% by weight, of a repeating unit derived from isobutylene.

Various kinds of polymerization methods have been reported so far as a synthesis method of the saturated hydrocarbon polymer and particularly in recent years, so-called living polymerization has been developed. In the case of the saturated hydrocarbon polymer, particularly the isobutylene polymer, it is known that the polymer is easy to be produced by employing inifer polymerization (J.P. Kennedy et al., J. Polymer Sci., Polymer Chem. Ed. vol. 15, p. 2843 (1997)) discovered by Kennedy et al.; that polymerization can be carried out to give a molecular weight in a range from 500 to 100,000 with molecular weight distribution of 1.5 or narrower; and that various kinds of functional groups may be introduced into the molecule termini.

Examples of the production method of the saturated hydrocarbon polymer having a silicon-containing group capable of crosslinking under siloxane bond formation may be, for example, the methods described in Japanese Kokoku Publication Hei-4-69659, Japanese Kokoku Publication Hei-7-108928, Japanese Kokai Publication Sho-63-254149, Japanese Kokai Publication Sho-64-22904, Japanese Kokai Publication Hei-1-197509, Patent pamphlet No.2, 539, 445 and Patent pamphlet No. 2,873,395, and Japanese Kokai Publication Hei-7-53882, however the method is not limited to these exemplified methods.

The above-mentioned saturated hydrocarbon polymer having a silicon-containing group capable of crosslinking under siloxane bond formation may be used alone or two or more kinds of the polymer may be used in combination.

A (meth)acrylic ester monomer composing the main chain of the above-mentioned (meth)acrylic ester polymer is not particularly limited and various kinds of monomers may be used. Examples include (meth)acrylic acid monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octal (meth)acrylate, 2-ethylhexyl (meth)acrylate, nonyl (meth) acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, γ -(methacryloyloxypropyl)dimethoxymethylsilane, methacryloyloxymethyltrimethoxysilane, methacryloyloxymethyltriethoxysilane, methacryloyloxymethyldimethoxymethylsilane, methacryloyloxymethyldiethoxymethylsilane (meth)acrylic acid ethylene oxide adduct, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, 2-perfluorohexadecylethyl (meth)acrylate and the like. With respect to the (meth) acrylic ester polymer, the following vinyl monomers can be copolymerized together with a (meth) acrylic ester monomer. Examples of the vinyl monomer are styrene monomers such as styrene, vinyltoluene, $\alpha$ -methylstyrene, chlorostyrene, styrenesulfonic acid and its salts; fluorine-containing vinyl monomers such as perfluoroethylene, perfluoropropylene, and vinylidene fluorite; silicon-containing vinyl monomers such as vinyltrimethoxysilane and vinyltriethoxysilane; maleic anhydride, maleic acid, and monoalkyl and diallyl esters of maleic acid; fumaric acid, and monoalkyl and dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl monomers such as acrylonitrile and methacrylonitrile; amido group-containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; vinyl chloride, vinylidene chloride, ally chloride, and allyl alcohol; and the like. They may be used alone or a plurality of them may be copolymerized. Among them, in terms of the physical properties of a produced material, and the like, polymers comprising a styrene monomer and a (meth)acrylic acid monomer are preferable. (Meth)acrylic polymers comprising an acrylic ester monomer and a methacrylic ester monomer are more preferable and acrylic polymers comprising an acrylic ester monomer are further preferable. In the case of use for general construction and the like, since physical properties such as low viscosity of a mixture and low modulus, high elongation, weather resistance, and heat resistant of the cured product, and the like are required, a butyl acrylate monomer is more preferable.

On the other hand, in the case of use for an automobile and the like for which oil-proofness etc. is required, an ethyl acrylate-based copolymer is more preferable. Since the polymer comprising mainly ethyl acrylate tends to be slightly inferior in low temperature properties (e.g. cold resistance) although having excellent oil-proofness, in order to improve the low temperature properties, a portion of ethyl acrylate may be replaced with butyl acrylate. However since the good oil-proofness is lowered as the ratio of butyl acrylate is increased, the ratio is preferablly suppressed to 40% or lower and more preferably to 30% or lower for use requiring the oil-proofness.

Also, to improve the low temperature properties and the like without deterioration of the oil-proofness, 2-methoxyethyl acrylate, 2-ethoxyethyl acrylate and the like in which oxygen is introduced, in an alkyl group in the side chain is preferably used. However, since introduction of an alkoxy group having an ether bond in the side chain tends to lower the heat resistance, the ratio is preferably adjusted to 40% or lower when heat resistance is needed. In accordance with the various uses and required aims, the required physical properties such as the oil-proofness, heat resistance, and low temperature properties should be considered and consequently, it is possible to adjust the ratio and obtain suitable polymers. For example, although it is not particularly limited, ethyl acrylate/butyl acrylate/2-methoxyethyl acrylate copolymer [(40 to 50)/(20 to 30)/(30 to 20) ratio by weight] can be exemplified as a polymer with good balance of the physical properties such as the oil-proofness, heat resistance, and low temperature properties. In the first aspect, these preferable monomers may be copolymerized with other monomers and also block-copolymerized with them and in that case, these preferable monomers are preferably contained at a ratio of 40% by weight or higher. In the above descriptions, (meth) acrylic acid means acrylic acid and/or methacrylic acid.

A synthesis method of a (meth)acrylic ester polymer is not particularly limited and a conventionally known method may be employed. However, a polymer obtained by a common free radical polymerization method using an azo compound, a peroxide or the like as a polymerization initiator has a problem that the molecular weight distribution value is generally as high as 2 or higher and the viscosity is thus high. Accordingly, to obtain a (meth) acrylic ester polymer having a crosslinkable functional group at a terminus of molecular chain at a high ratio, and with narrow molecular weight distribution and low viscosity, a living radical polymerization method is preferably employed.

Among "living radical polymerization method", "atom transfer radical polymerization method" for polymerizing a (meth)acrylic ester monomer using an organic halide, a halogenated sulfonyl compound or the like as an initiator and a transition metal complex as a catalyst has, in addition to the characteristics of the above-mentioned "living radical polymerization methods", a wide range of the option of the initiator and the catalyst since a halogen etc. which is relatively advantageous for the functional group conversion reaction, and is therefore further preferable as a production method of the (meth)acrylic ester polymer having a specified functional group. Examples of the atom transfer radical polymerization method are, for example, the method described in Matyjaszewski et al., J. Am. Chem. Soc., vol. 117, p. 5614 (1995).

Examples of a production method of the (meth)acrylic ester polymer having a silicon-containing group capable of crosslinking under siloxane bond formation are, for example, production methods employing free radical polymerization methods using chain transfer agents and described in Japanese Kokoku Publication Hei-3-14068, Japanese Kokoku Publication Hei-4-55444, Japanese Kokai Publication Hei-6--211922 , and the like. Also, a production method employing an atom transfer radical polymerization method is disclosed in Japanese Kokai Publication Hei-9-272714 and the like, however the method is not limited to these exemplified methods.

The above-mentioned (meth) acrylic ester polymers having a silicon-containing group capable of crosslinking under siloxane bond formation may be used alone or two or more kinds of them may be used in combination.

These organic polymers having a silicon-containing group capable of crosslinking under siloxane bond formation

may be used alone or two or more of them may be used in combination. Practically, organic polymers obtained by blending two or more kinds of polymers selected from the group consisting of polyoxyalkylene polymers having a silicon-containing group capable of crosslinking under siloxane bond formation, saturated hydrocarbon polymers having a silicon-containing group capable of crosslinking under siloxane bond formation, and (meth)acrylic ester polymers having a silicon-containing group capable of crosslinking under siloxane bond formation may also be used.

Production methods of organic polymers by blending a polyoxyalkylene polymer having a silicon-containing group capable of crosslinking under siloxane bond formation and a (meth)acrylic ester polymer having a silicon-containing group capable of crosslinking under siloxane bond formation are proposed in Japanese Kokai Publication Sho-59-122541, Japanese Kokai Publication Sho-63-112642, Japanese Kokai Publication Hei-6-172631, Japanese Kokai Publication Hei-11-16763 and the like, however the production method is not limited to these exemplified methods. A preferred specific example is a production method involving blending a polyoxyalkylene polymer having a silicon-containing group capable of crosslinking under siloxane bond formation with a copolymer having a silicon-containing group capable of crosslinking under siloxane bond formation and a molecular chain substantially comprising a (meth) acrylic ester monomer unit having an alkyl group of 1 to 8 carbon atoms and represented by the following general formula (6):

$$-CH_2-C(R^9)(COOR^{10})- \qquad (6)$$

(wherein $R^9$ represents a hydrogen atom or a methyl group; and $R^{10}$ denotes an alkyl group having 1 to 8 carbon atoms) and a (meth)acrylic ester monomer unit having an alkyl group of 10 or more carbon atoms and represented by the following general formula (7):

$$-CH_2-C(R^9)(COOR^{11})- \qquad (7)$$

(wherein $R^9$ represents the same as defined above; and $R^{11}$ denotes an alkyl group having 10 or more carbon atoms).

Examples of $R^{10}$ in the above-mentioned formula (6) are alkyl groups having 1 to 8, preferably 1 to 4, and more preferably 1 or 2 carbon atoms such as methyl group, ethyl group, propyl group, n-butyl group, tert-butyl group, 2-ethylhexyl group and the like. The alkyl group standing for $R^{10}$, which is contained in the organic polymer, may be a single alkyl group or two or more alkyl groups in combination.

Examples of $R^{11}$ in the above-mentioned formula (6) are long chain alkyl groups having 10 or more, generally 10 to 30, and preferably 10 to 20 carbon atoms such as lauryl group, tridecyl group, cetyl group, stearyl group, behenyl group and the like. Same as the case of $R^{11}$, which is contained in the organic polymer, the alkyl group standing for $R^{10}$ may be a single alkyl group or two or more alkyl groups in combination.

Preferably, the molecular chain of the (meth)acrylic ester copolymer substantially comprises the monomer units represented by the general formulae (6) and (7) and "substantially" here means the total of the monomer units represented by the general formulae (6) and (7) contained in the copolymer exceeds 50% by weight. The total of the monomer units represented by the general formulae (6) and (7) is preferably 70% by weight or more.

The ratio of the monomer unit represented by the general formula (6) and the monomer unit represented by the general formula (7) is preferably from (95:5) to (40:60) and more preferably (90:10) to (60:40) on the basis of weight.

The monomer units which may be contained in the copolymer, other than those represented by the general formulae (6) and (7), may include acrylic acid such as acrylic acid and methacrylic acid; amido group-containing monomers such as acrylamide, methacrylamide, N-methylolacrylamide, and N-methylolmethacrylamide, epoxy group-containing monomers such as glycidyl acrylate and glycidyl methacrylate, and amino group-containing monomers such as diethylaminoethyl acrylate, diethylaminoethyl methacrylate, and aminoethyl vinyl ether; and monomer units derived from acrylonitrile, styrene, $\alpha$-methylstyrene, alkyl vinyl ether, vinyl chloride, vinyl acetate, vinyl propionate, and ethylene.

The organic polymer obtained by blending the saturated hydrocarbon polymer having a silicon-containing group capable of crosslinking under siloxane bond formation and the (meth)acrylic ester copolymer having a silicon-containing group capable of crosslinking under siloxane bond formation may include those proposed in Japanese Kokai Publication Hei-1-168764, Japanese Kokai Publication 2000-186176 and the like, however it is not limited to these exemplified polymers.

Further, a production method of the organic polymer obtained by blending the (meth)acrylic ester copolymer having a silicon-containing group capable of crosslinking under siloxane bond formation may also include a method of polymerizing a (meth)acrylic ester monomer in the presence of an organic polymer having a silicon-containing group capable of crosslinking under siloxane bond formation. The methods are practically disclosed in Japanese Kokai Publication Sho-59-78223, Japanese Kokai Publication Sho-59-168014, Japanese Kokai Publication Sho-60-228516, Japanese Kokai Publication Sho-60-228517 and the like, however the method is not particularly limited to these exemplified methods.

On the other hand, the main chain skeleton of the organic polymer may contain another component such as

an urethane bond component in an extent that the effect of the invention is not so significantly adversely affected.

The above-mentioned urethane bond component is not particularly limited and may include a group (hereinafter, referred to as an amido segment in some cases) produced by reaction of an isocyanate group and an active hydrogen group.

The amido segment is a group represented by the general formula (8):

$$-NR^{12}-C(=O)- \qquad (8)$$

(wherein $R^{12}$ denotes a hydrogen atom or a monovalent organic group, preferably a substituted or unsubstituted monovalent organic group having 1 to 20 carbon atoms, and more preferably a substituted or unsubstituted monovalent organic group having 1 to 8 carbon atoms).

The above-mentioned amido segment may specifically include an urethane group produced by reaction of an isocyanate group and a hydroxyl group; an urea group produced by reaction of an isocyanate group and an amino group; a thiourethane group produced by reaction of an isocyanate group and a mercapto group; and the like. Also, in the first aspect, groups produced by reaction of an active hydrogen in the above-mentioned urethane group, urea group, and thiourea group further with an isocyanate group are also included as the group represented by the general formula (8).

An industrial method for easily producing the organic polymer having the amido segment and a silicon-containing group capable of crosslinking under siloxane bond formation may include, for rexample, a method for producing the organic polymer by causing reaction of an excess amount of a polyisocyanates compound with an organic polymer having an active hydrogen-containing group at a terminus for obtaining a polymer having an isocyanate group at the terminus of a polyurethane type main chain and either successively or simultaneously causing reaction of the W-group of a silicon compound represented by the general formula (9) with all or a portion of the isocyanate group:

$$W-R^{13}-SiR^{5}_{3-a}X_{a} \qquad (9)$$

(wherein $R^5$, X, and a are the same as described above; $R^{13}$ denotes a divalent organic group and more preferably a substituted or unsubstituted divalent hydrocarbon group having 1 to 20 carbon atoms; W denotes an active hydrogen-containing group selected from a hydroxyl, carboxyl, mercapto and (primary or secondary) amino groups). Conventionally known production methods of the organic polymer relevant to the above-mentioned production method are exemplified in Japanese Kokoku Publication Sho-46-12154 (U.S. Patent No. 3,632,557), Japanese Kokai Publication Sho-58-109529 (U.S. Patent No. 4,374,237), Japanese Kokai Publication Sho-62-13430 (U.S. Patent No. 4,645,816), Japanese Kokai Publication Hei-8-53528 (EPO Patent No. 0676403), Japanese Kokai Publication Hei-10-204144 (EPO Patent No. 0831108), Japanese Kohyo Publication 2003-508561 (U.S. Patent No. 6,197,912), Japanese Kokai Publication Hei-6-211879 (U.S. Patent No. 5,364,955), Japanese Kokai Publication Hei-10-53637 (U.S. Patent No. 5,756,751), Japanese Kokai Publication Hei-11-100427, Japanese Kokai Publication 2000-169544, Japanese Kokai Publication 2000-169545, Japanese Kokai Publication 2002-212415, Japanese Patent No. 3,313,360, U.S. Patent No. 4,067,844, .S. Patent No. 3,711,445, Japanese Kokai Publication 2001-323040, and the like.

Also, the method may include a method for producing the organic polymer by causing reaction of an isocyanate compound having a silicon-containing group capable of crosslinking under siloxane bond formation represented by the general formula (10) with an organic polymer having an active hydrogen-containing group at a terminus:

$$O=C=N-R^{13}-SiR^{5}_{3-a}X_{a} \qquad (10)$$

(wherein $R^5$, $R^{13}$, X, and a are the same as described above). Conventionally known production methods of the organic polymer relevant to the above-mentioned production method are exemplified in Japanese Kokai Publication Hei-11-279249 (U.S. Patent No. 5,990,257), Japanese Kokai Publication 2000-119365 (U.S. Patent No. 6046270), Japanese Kokai Publication Sho-58-29818 (U.S. Patent No. 4345053), Japanese Kokai Publication Hei-3-47825 (U.S. Patent No. 5068304), Japanese Kokai Publication Hei-11-60724, Japanese Kokai Publication 2002-155145, Japanese Kokai Publication 2002-249538, WO 03/018658, WO 03/059981, and the like.

The organic polymer having an active hydrogen-containing group at a terminus may include oxyalkylene polymers having a hydroxyl group at a terminus (e.g. polyether polyols), polyacrylic polyols, polyester polyols, saturated hydrocarbon polymers having a hydroxyl group at a terminus (e.g. polyolefin polyols), polythiols compounds, polyamine compounds and the like. Among them, polyether polyols, polyacrylic polyols, and polyolefin polyols are preferable since the glass transition temperature of the organic polymers to be obtained is relatively low and cured products to be obtained are excellent in cold resistance. Particularly, polyether polyols are more preferable since the organic polymers to be obtained have low viscosity, good workability and excellent deep part curability and adhesion. Polyacrylic polyols and saturated hydrocarbon polymers are further preferable since cured products derived from the organic polymers to be obtained are excellent in weather resistance and heat resistance.

The polyether polyols to be used may be those which are produced by any production method, however the polyether polyols preferably have at least 0.7 hydroxyl groups per molecular terminus on average of all molecules. Practically, oxyalkylene polymers produced by using a conventional alkali metal catalyst; and oxyalkylene polymers produced by causing reaction of alkylene oxides with an initiator such as polyhydroxy compounds having at least two hydroxyl groups in the presence of a composite metal-cyanide complex or cesium can be exemplified, for example.

Among the above-mentioned polymerization methods, the polymerization method using a composite metal-cyanide complex is preferable since oxyalkylene polymers with low un-saturation degree, narrow Mw/Mn, low viscosity, high acid resistance, and high weather resistance can be obtained.

Examples of the above-mentioned polyacrylic polyols are polyols having a (meth)acrylic acid alkyl ester (co)polymer as a skeleton and containing a hydroxyl group in a molecule. A synthesis method of the polymers is preferably a living radical polymerization method and more preferably an atom transfer radical polymerization method since they give narrow molecular weight distribution and low viscosity. Also, a polymer obtained by so-called SGO process, that is a polymer obtained by continuous bulk polymerization of an acrylic alkyl ester monomer at high temperature and high pressure as described in Japanese Kokai Publication 2001-207157 is preferablly used. More practically, UH-2000 manufactured by Toagosei Co., Ltd. can be exemplified, for example.

Specific examples of the above-mentioned polyisocyanate compound may include aromatic polyisocyanates such as toluene (tolylene) diisocyanate, diphenylmethane diisocyanate, and xylylene diisocyanate; aliphatic polyisocyanates such as isophorone diisocyanate and hexamethylene diisocyanate; and the like.

The silicon compound represented by the general formula (9) is not particularly limited and specific examples thereof are amino group-containing silanes such as γ-aminopropyltrimethoxysilane, N-(β-aminoethyl)-γ-aminopropyltrimethoxysilane, γ -(N-phenyl)aminopropyltrimethoxysilane, N-ethylaminoisobutyltrimethoxysilane, N-cyclohexylaminomethyltriethoxysilane, N-cyclohexylaminomethyldiethoxymethylsilane, and N-phenylaminomethyltrimethoxysilane; hydroxy group-containing silanes such as γ-hydroxypropyltrimethoxysilane; mercapto group-containing silanes such as γ-mercaptopropyltrimethoxysilane; and the like. Also, as described in Japanese Kokai Publication Hei-6-211879 (U.S. Patent No. 5,364,956), Japanese Kokai Publication Hei-10-53637 (U.S. Patent NO. 5,756,751), Japanese Kokai Publication Hei-10-204144 (EPO Patent No. 0831108), Japanese Kokai Publication 2000-169544, and Japanese Kokai Publication 2000-169545, Michael adducts of various kinds of α ,β-unsaturated carbonyl compounds and primary amino group-containing silanes or Michael adducts of various kinds of (meth)acryloyl group-containing silanes and primary amino group-containing compounds are usable as the silicon compound represented by the general formula (9).

The isocyanate compound having a silicon-containing group capable of crosslinking under siloxane bond formation represented by the general formula (10) is not particularly limited and specific examples thereof are γ-trimethoxysilylpropyl isocyanate, γ -triethoxysilylpropy isocyanate, γ -methyldimethoxysilylpropyl isocyanate, γ-methyldiethoxysilylpropyl isocyanate, trimethoxysilylmethyl isocyanate, triethaxymethylsilylmethyl isocyanate, dimethoxymethylsilylmethyl isocyanate, diethoxymethylsilylmethyl isocyanate and the like. Also, as described in Japanese Kokai Publication 2000-119365 (U.S. Patent No. 6,046,270), compounds obtained by reaction of silicon compounds represented by the general formula (9) and excess amounts of the above-mentioned polyisocyanate compounds are usable as the isocyanate compound having a silicon-containing group capable of crosslinking under siloxane bond formation represented by the general formula (10).

If a large quantity of the amido segment in contained in the main chain skeleton of the organic polymer as the component (A) of the first aspect, the viscosity of the organic polymer is increased and the composition may possibly be inferior in workability. On the other hand, due to the amido segment in the main chain skeleton of the component (A), the curability of the composition of the invention tends to be increased. Accordingly, in the case where the amido segment is contained in the main chain skeleton of the component (A), the number of amido segments is preferably 1 to 10, more preferably 1.5 to 7, and further preferably 2 to 5, per one molecule on average. If it is lower than 1, the curability is sometimes insufficient and if it is more than 10, the organic polymer become highly viscous and the composition may become inferior in workability.

<Component (B): carboxylic acid metal salt (b1) and/or carboxylic acid (b2)>

In the first aspect, as the component (B), the carboxylic acid metal salt (by) and/or the carboxylic acid (b2) is used. The component (B) is proper for forming a siloxane bond from a hydroxyl group or a hydrolysable group bond to a silicon atom contained in the organic polymer as the component (A), that is, the component (B) works as so-called silanol condensation catalyst.

The curable composition according to the first aspect may contain, as the component (B), either of a carboxylic acid metal salt (b1) and a carboxylic acid (b2) or both of a carboxylic acid metal salt (b1) and a carboxylic acid (b2). Each of them is preferred as a non-organotin catalyst in view of a light burden on the environment as imposed thereby. In particular, the carboxylic acid (b2) is more preferred since it is a catalyst substantially free of any metal. The carboxylic acid metal salt (b1) is also more preferred since the extent of retardation in curing of the resulting curable composition

during storage is smaller as compared with the carboxylic acid (b2).

As the carboxylic acid metal salt and/or the carboxylic acid to be used in accordance with the first aspect, there is no particular limitation and various compounds can be used.

Preferable examples of the carboxylic acid metal salt (b1) are tin carboxylate, lead carboxylate, bismuth carboxylate, potassium carboxylate, calcium carboxylate, barium carboxylate, titanium carboxylate, zirconium carboxylate, hafnium carboxylate, vanadium carboxylate, manganese carboxylate, iron carboxylate, cobalt carboxylate, nickel carboxylate, and cerium carboxylate since they have high catalytic activity, more preferable examples are tin carboxylate, lead carboxylate, bismuth carboxylate, titanium carboxylate, iron carboxylate, and zirconium carboxylate, even more preferable examples may be tin carboxylate, and stannous carboxylate is most preferable.

As the carboxylate ion in the carboxylic acid metal salt, an ion derived from a hydrocarbon type compound which contains a carboxylic group and has 2 to 40 carbon atoms including the carbon of the carbonyl group is suitably used, and in terms of the availability, an ion derived from a hydrocarbon type carboxylic acid having 2 to 20 carbon atoms is further suitably used.

As the carboxylate ion in the carboxylic acid metal salt, there may be mentioned ionized forms of the following acids. Specific examples of these acids may include linear saturated fatty acids such as acetic acid, propionic acid, butyric acid, valeric acid, caproic acid, enanthic acid, caprylic acid, 2-ethythexanoic acid, pelargonicacid, capric acid, undecanoic acid, lauric acid, tridecyl acid, myristic acid, pentadecyl acid, palmitic acid, heptadecyl acid, stearic acid, nonadecanoic acid, arachic acid, behenic acid, lignoceric acid, cerotic acid, montanic acid, melissic acid, and lacceric acid; mono-one unsaturated fatty acids such as undecylenic acid, linderic acid, tsuzuic acid, physeteric acid, myristoleic acid, 2-hexadecenic acid, 6-hexadecenic acid, 7-hexadecenic acid, palmitoleic acid, petroselinic acid, oleic acid, elaidic acid, asclepic acid, vaccenic acid, gadoleic acid, gondoic acid, cetoleic acid, erucic acid, brassylic acid, selacholeic acid, ximenic acid, rumenic acid, acrylic acid, methacrylic acid, angelic acid, crotonic acid, isocrotonic acid, and 10-undecenic acid; polyene unsaturated fatty acids such as linoelaidic acid, linoleic acid, 10,12-octadecadienic acid, hiragonic acid, α-eleostearic acid, β-eleostearic acid, punicic acid, linolenic acid, 8,11,14-eicosatrienoic acid, 7,10,13-docosatrienoic acid, 4,8,11,14-hexadecatetraenoic acid, moroctic acid, stearidonic acid, arachidonic acid, 8,12,16,19-docosatetraenoic acid, 4,8,12,15,18-eicosapentaenoic acid, clupanodonic acid, herring acid, and docosahexaenoic acid; branched fatty acids such as 1-methylbutyric acid, isobutyric acid, 2-ethylbutyric acid, isovaleric acid, tuberculostearic acid, pivalic acid, and neodecanoic acid; triple bond-containing fatty acids such as propiolic acid, tariric acid, stearolic acid, crepenynic acid, ximenynic acid, and 7-hexadecinic acid; alicyclic carboxylic acids such as naphthenic acid, malvalinic acid, sterculio acid, hydnocarpic acid, chaulmoogric acid, and garlic acid; oxygen-containing fatty acids such as acetoacetic acid, ethoxyacetic acid, glyoxylic acid, glycolic acid, gluconic acid, sabinic acid, 2-hydroxytetradecanoic acid, ipurolic acid, 2-hydroxyhexadecanoic acid, jarapinolic acid, juniperinic acid, ambrettolic acid, aleuritic acid, 2-hydroxyoctadecanoic acid, 12-hydroxyoctadecanoic acid, 18-hydroxyoctadecanoic cid, 9,10-dihydroxyoctadecanoic acid, ricinoleic acid, kamlolenic acid, licanic acid, phellonic acid, and cerebronic acid; halogen-substituted monocarboxylic acids such as chloroacetic acid, 2-chloroacrylic acid, and chlorobenzoic acid; and the like. Examples of the aliphatic dicarboxylic acids include saturated dicarboxylic acids such as adipic acid, azelaic acid, pimelic acid, suberic acid, sebacic acid, ethylmalonic acid, glutaric acid, oxalic acid, malonic acid, succinic acid, and oxydiacetic acid; unsaturated dicarboxylic acids such as maleic acid, fumaric acid, acetylenedicarboxylic acid, and itaconic acid; and the like. Examples of the aliphatic polycarboxylic acid are tricarboxylic acids such as aconitic acid, citric acid, and isocitric acid; and the like. Examples of the aromatic carboxylic acids are aromatic monocarboxylic acids such as benzoic acid, 9-anthracenecarboxylic acid, atrolactinic acid, anisic acid, isopropylbenzoic acid, salicylic acid, and toluic acid; aromatic polycarboxylic acids such as phthalic acid, isophthalic acid, terephthalic acid, carboxyphenylacetic acid, and pyromellitic acid; and the like. In addition, usable examples thereof are amino acids such as alanine, leucine, threonine, aspartic acid, glutamic acid, arginine, cysteine, methionine, phenylalanine, tryptophane and histidine.

Particularly, in terms of the availability, low cost, and compatibility with the component (A), the carboxylate ion is preferably ionized forms of 2-ethylhexanoic acid, octylic acid, neodecanoic acid, oleic acid, naphthenic acid or the like.

In the case where the melting point of the carboxylic acid is high (that is, the crystallinity thereof is high), the melting point of the acid group-containing carboxylic acid metal salt obtained therefrom is also high and therefore is difficult to be handled (that is, inferior in workability). Thus, the melting point of the carboxylic acid is preferablly 65°C or lower, more preferablly -50 to 50°C, and even more preferablly -40 to 35°C.

In the case where the number of carbon atoms of the carboxylic acid is high (that is, the molecular weight thereof is high), the carboxylic acid metal salt obtained therefrom is solid or thick liquid and thus is difficult to be handled (that is, inferior in workability). On the contrary, in the case where the number of carbon atoms of the carboxylic acid is low (that is, the molecular weight thereof is low), the carboxylic acid metal salt composed of the carboxylate ion obtained from the carboxylic acid contains a large quantity of components easy to be volatilized by heating and therefore the catalytic function of the carboxylic acid metal salt tends to be lowered in some cases. Particularly, in the case where the composition is thinly spread (as a thin layer), volatility thereof by heating is high and therefore the catalytic function of the carboxylic acid metal salt is considerably decreased in some cases. Accordingly, the above-mentioned carboxylic

acid preferably has 2 to 20 carbon atoms, more preferably 6 to 17 carbon atoms, and even more preferably 8 to 12 carbon atoms including the carbon atom of the carbonyl group.

In terms of the handling easiness (workability and viscosity) of the carboxylic acid metal salt, dicarboxylic or monocarboxylic acid metal salts are preferable and monocarboxylic acid metal salts are even more preferable.

The above-mentioned carboxylic acid metal salt is preferably a metal salt of a carboxylic acid of which the carbon atom adjacent to a carbonyl group is a tertiary carbon (tin 2-ethylhexanoate, and the like) or a quaternary carbon (tin neodecanoate, tin pivalate, and the like) in terms of high curing rate and particularly preferably the metal salt of a carboxylic acid of which the carbon atom adjacent to a carbonyl group is a quaternary carbon. The metal salt of a carboxylic acid of which the carbon atom adjacent to a carbonyl group is a quaternary carbon is more excellent in the adhesion as compared with other carboxylic acid metal salts. Herein, the term "tertiary carbon" means a carbon atom bound to three carbon atoms, and the term "quaternary carbon" means a carbon atom bound to four carbon atoms.

Examples of the carboxylate ion in the metal salt of a carboxylic acid of which the carbon atom adjacent to a carboxyl group is a quaternary carbon may be ionized forms of linear fatty acids represented by the general formula (11):

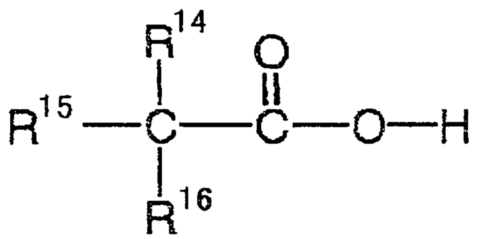

(11)

(wherein $R^{14}$, $R^{15}$, and $R^{16}$ independently denote a substituted or unsubstituted monovalent hydrocarbon group having 1 to 20 carbon atoms and may contain a carboxyl group) or alicyclic fatty acids represented by the general formulae (12):

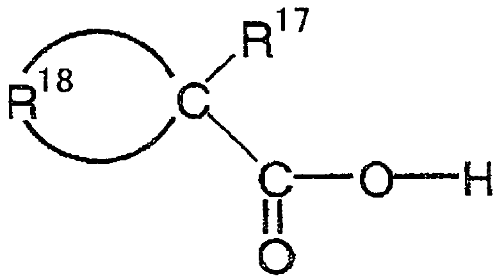

(12)

(wherein $R^{17}$ denotes a substituted or unsubstituted monovalent hydrocarbon group having 1 to 20 carbon atoms, $R^{18}$ denotes a substituted or unsubstituted divalent hydrocarbon group having 2 to 20 carbon atoms and both may contain a carboxyl group), and (13):

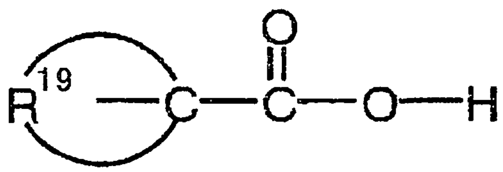

(13)

(wherein $R^{19}$ denotes a substituted or unsubstituted trivalent hydrocarbon group having 3 to 20 carbon atoms and may contain a carboxyl group). Specific examples thereof include ionized forms of linear monocarboxylic acids such as pivalic acid, 2,2-dimethylbutyric acid, 2-ethyl-2-methylbutyric acid, 2,2-diethylbutyric acid, 2,2-dimethylvaleric acid, 2-ethyl-2-methylvaleric acid, 2,2-diethylvaleric acid, 2,2-dimethylhexanoic acid, 2,2-diethylhexanoic acid, 2,2-dimethyl-octanoic acid, 2-ethyl-2,5-dimethylhexanoic acid, neodecanoic acid, versatic acid, and 2,2-dimethyl-3-hydroxypropoinic acid; linear dicarboxylic acids such as dimethylmalonic acid, ethylmethylmalonic acid, diethylmalonic acid, 2,2-dimethylsuccinic acid, 2,2-diethylsuccinic acid, and 2,2-dimethylglutaric acid; linear tricarboxylic acids such as 3-methylisocitric acid

and 4,4-dimethyl-aconitic acid; cyclic carboxylic acids such as 1-methylcyclopentanecarboxylic acid, 1,2,2-trimethyl-1,3-cyclopentanedicarboxylic acid, 1-methylcyclohexanecarboxylic acid, 2-methylbicyclo[2.2.1]-5-heptene-2-carboxylic acid, 2-methyl-7-oxabicyclo[2-2.1]-5-heptene-2-carboxylic acid, 1-adamantanecarboxylic acid, bicycle[2.2.1]heptane-1-carboxylic acid, bicycle[2.2.2]octane-1-carboxylic acid; and the like. The compounds having a carboxylic acid of which the carbon atom adjacent to a carbonyl group is a tertiary carbon or a quaternary carbon exist many in nature and ionized forms of these may of course be used.

Particularly in terms of good compatibility with the component (A) and handling easiness, monocarboxylic acid metal salts are more preferable and linear monocarboxylic acid metal salts are further preferable. Furthermore, due to the availability, metal salts of pivalic acid, neodecanoic acid, versatic acid, 2,2-dimethyloctanoic acid, 2-ethyl-2,5-dimethylhexanoic acid and the like are particularly preferable.

The carboxylate ion in the metal salt of a carboxylic acid of which the carbon atom adjacent to a carbonyl group is a quaternary carbon have preferably 5 to 20, more preferably 6 to 17, and further preferably 8 to 12 carbon atoms. If the number of carbon atoms is higher than the range, they tend to be solid and to become hardly compatible with the component (A) and thus no reactivity tends to be obtained. On the other hand, if the number of carbon atoms is lower than the range, they become more volatile and tend to be odorous. From this viewpoint, the metal salts of neodecanoic acid, versatic acid, 2,2-dimethyloctanoic acid, and 2-ethyl-2,5-dimethylhexanoic acid are most preferable.

Further, the above exemplified carboxylic acid metal salts as the component (b1) may be used alone and also two or more of them may be used in combination.

Examples of the carboxylic acid to be used as the component (b2) may be various carboxylic acids exemplified as the carboxylic acid from which the carboxylate ion in the carboxylic acid metal salt for the component (b1) is derived.

Similarly to the carboxylate ion in the carboxylic acid metal salt as the component (b1), as for the carboxylic acid of the component (b2), the number of carbon atoms including the carbon of the carbonyl group preferablly in a range from 2 to 20, more preferably 6 to 17, and even more preferably 8 to 12. In terms of the handling easiness (the workability and viscosity) of the carboxylic acid, dicarboxylic acids or monocarboxylic acids are preferable and monocarboxylic acids are more preferable. Further, the carboxylic acid is preferably a carboxylic acid of which the carbon atom adjacent to a carbonyl group is a tertiary carbon (2-ethylhexanoic acid, and the like) or a quaternary carbon (neodecanoic acid, pivalic acid, and the like) in terms of high curing rate and particularly preferably the carboxylic acid of which the carbon atom adjacent to a carbonyl group is a quaternary carbon. In terms of the adhesion, the carboxylic acid of which the carbon atom adjacent to a carbonyl group is a quaternary carbon is preferable.

In terms of the availability, curability, and workability, the carboxylic acid is particularly preferably 2-ethylhexanoic acid, neodecanoic acid, versatic acid, 2,2-dimethyloctanoic acid, 2-ethyl-2,5-dimethylhexanoic acid.

The component (b2) may be used alone or two or more of them may be used in combination.

The component (b1) and the component (b2) may be used alone or in combination.

When a carboxylic acid metal salt (b1) and a carboxylic acid (b2) are used in combination, it is particularly preferred that the carboxylic acid from which the carboxylate ion in the carboxylic acid metal salt (b1) is derived be the same as the carboxylic acid (b2).

The use of a carboxylic acid metal salt and/or a carboxylic acid as the component (B) gives cured products showing good recovery, durability and creep resistance.

The amount of the component (B) to be used is preferably about 0.01 to 20 parts by weight, more preferably about 0.5 5 to 10 parts by weight, per 100 parts by weight of the component (A). When the level of incorporation of the component (B) is below this range, the curing rate may become slow and, further, the catalytic activity may decrease during storage. When, on the other hand, the level of incorporation of the component (B) is in excess of the above range, the pot life may become excessively short, possibly leading to poor workability. When, in the case of combined use of a carboxylic acid metal salt (b1) and a carboxylic acid (b2), the amount of the carboxylic acid (b2) is excessive, the adhesive properties may become unsatisfactory in some instances.

<Component (F) : amine compound>

In the case where the activity is low and a proper curability cannot be obtained by using the component (B) alone, an amine compound, which is the component (F), may be added as a promoter.

Specific examples of the amine compound as the component (F) may include aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines such as dimethylamine, diethylamine, dipropylamine, diisopropylamine, dibutylamine, diamylamine, dihexylamine, diocylamine, bis(2-ethylhexyl)amine, didecylamine, dilaurylamine, dicetylamine, distearyiamine, N-methyl-N-stearylamine, N-ethyl-N-stearylamine, and N-butyl-N-stearylamine; aliphatic tertiary amines such as triamylamine, trihexylamine and trioxylamine; aliphatic unsaturated amines such as triallylamine and oleylamine; aromatic amines such as laurylaniline, stearylaniline, and triphenylamine; other amines such as monoethanolamine,

diethanolamine, triethanolamine, 3-hydroxypropylamine, diethylenetriamine, triethylenetetramine, benzylamine, 3-methoxypropylamine, 3-lauryloxypropylamine, 3-dimethylaminopropylamine, 3-diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, 1,8-diazabicyclo(5,4,0)undecene-7(DBU), and 1,5-diazabicyclo(4,3,0)nonene-5(DBN); and the like, however the amine compound is not limited to these examples.

Since the function of the component (F) as a promoter considerably differs in accordance with the structure of the component (F) itself and the compatibility with the component (A) in the present invention, owing to the high function as a promoter, primary amines such as octylamine and laurylamine are preferable and also amine compounds having a hydrocarbon group containing at least one heteroatom are preferable. Herein, the heteroatom includes N, O, S and the like, however it is not limited to these elements. Examples of the above-mentioned amine compounds are the amines exemplified as other amines, and the like. Among them, amine compounds having a hydrocarbon group containing a heteroatom on any carbon atom located at the second to fourth positions are more preferable. Examples of the amine compounds are ethylenediamine, ethanolamine, dimethylaminoethylamine, diethylaminoethylamine, 3-hydroxypropylamine, diethylenetriamine, 3-methoxypropylamine, 3-lauryloxypropylaimine, N-methyl-1,3-propanediamine, 3-dimethylaminopropylamine, 3-diethylaminopropylamine, 3-(1-piperadinyl)propylamine, 3-morpholinopropylamine and the like. Especially, 3-diethylaminopropylamine and 3-morpholinopropylamine are more preferable in terms of the high function as a promoter. Particularly preferable is 3-diethylaminopropylamine since it gives a curable composition with excellent adhesion, workability, and storage stability.

The addition amount of the amine compound as the component (F) is preferably about 0.01 to 20 parts by weight and more preferably 0.1 to 5 parts by weight per 100 parts by weight of the component (A). If the addition amount of the amine compound is lower than 0.01 parts by weight, the curing rate may possibly be retarded and curing reaction may not be promoted sufficiently in some cases. On the other hand, the addition amount of the amine compound exceeds 20 parts by weight, the pot life tends to be so short and then the workability tends to be worsened. On the contrary, the curing rate may be retarded in some cases.

The carboxylic acid metal salt and/or carboxylic acid is used as the curing catalyst of the first aspect and to an extent that the effect of the invention is not lowered, another curing catalyst may be used in combination. Specific examples of these may be titanium compounds such as tetrabutyl titanate, tetrapropyl titanate, titanium tetrakis(acetylacetonate), bis(acetylacetonato)diisopropoxytitanium, diisopropoxytitanium bis(ethylacetoacetate); organotin(IV) compounds such as dibutyltin dilaurate, dibutyltin maleate, dibutyltin phthalate, dibutyltin dioctanoate, dibutyltin bis(2-ethylhexanoate), dibutyltin bis(methylmaleate), dibutyltin bis(ethylmaleate), dibutyltin bis(butylmaleate), dibutyltin bis(octylmaleate), dibutyltin bis(tridecylmaleate) dibutyltin bis(benzylmaleate), dibutyltin diacetate, dioctyltin bis(ethylmaleate), dioctyltin bis(octylmaleate), dibutyltin dimethoxide, dibutyltin bis(nonylphenoxide), dibutenyltin oxide, dibutyltin oxide, dibutyltin bis (acetylacetonate), dibutyltin bis(ethylacetoacetate), a reaction product of dibutyltin oxide and a silicate compound, and a reaction product of dibutyltin oxide and a phthalic acid ester; organoaluminum compounds such as aluminum tris(acetylacetonate), aluminum tris(ethylacetoacetate), and diisopropoxyaluminum ethyl acetoacetate; zirconium compounds such as zirconium tetrakis(acetylacetonate). In the case of addition of an organotin compound, however, the toxicity thereof or the burden on the environment as exerted thereby may increase in response to the level of addition thereof and, therefore, the level of addition of an organo compound is preferably not higher than 0.5 part by weight, more preferably not higher than 0.1 part by weight, still more preferably not higher than 0.01 part by weight, per 100 parts by weight of the component (A); substantial absence thereof is most preferred.

<Component (C): organic sulfonic acid ester>

In the first aspect, an organic sulfonic acid ester represented by the general formula (I):

$$R^1SO_3R^2 \qquad (1)$$

(wherein $R^1$ and $R^2$ each independently represents a substituted or unsubstituted hydrocarbon group), is used as the component (C). Generally, the viscosity and slump characteristics of a curable composition as well as the mechanical characteristics, such as tensile strength and elongation, of cured products obtained by curing of the composition can be adjusted by adding a plasticizer to the curable composition. The component (C) is inexpensive, high in plasticizing efficiency, low in volatility, excellent in flexibilizing effect and excellent in low temperature fluidity, so that it is a plasticizer excellent in performance characteristics balance.

The plasticizers in common use are carboxylic acid ester type plasticizers. When, however, the above-mentioned carboxylic acid metal salt and/or carboxylic acid (B) is used as a curing catalyst for the curable composition which comprises an organic polymer (A) having a silicon-containing group capable of crosslinking under siloxane bond formation and such a carboxylic acid ester plasticizer as mentioned above, curing retardation tends to occur during storage of the

curable composition under high-temperature conditions or for a prolonged period of time.

This curing retardation phenomenon is probably caused in the following manner: the transesterification reaction proceeds between the carboxylic acid ester plasticizer and the carboxylic acid metal salt and/or carboxylic acid during a long period of storage and, as a result, the content of the highly active component (B) in the composition is lowered.

On the other hand, it is possible to alleviate the problem of curing retardation by using polypropylene glycol as a plasticizer, as specifically described in Japanese Kokai Publication 2000-345054 (United States Patent No. 6,410,640). It has been revealed, however, that the use of polypropylene glycol as a plasticizer results in a decrease in the catalytic activity of the component (B) and in a slower curing rate before storage as compared with the use of a carboxylic acid ester plasticizer.

The use of an organic sulfonic acid ester (C) as a plasticizer in accordance with the first aspect can alleviate the problem of decreased curability during storage as encountered when a carboxylic acid ester plasticizer is used and, further, can alleviate the slower curing rate problem encountered when a polypropylene glycol-based plasticizer is used.

From the availability and plasticizing efficiency viewpoint, $R^1$ in the general formula (1) given hereinabove is preferably a substituted or unsubstituted hydrocarbon group containing 1 to 40 carbon atoms, more preferably a substituted or unsubstituted alkyl or aryl group containing 1 to 40 carbon atoms, still more preferably a substituted or unsubstituted alkyl group containing 1 to 40 carbon atoms, particularly preferably an unsubstituted alkyl group containing 5 to 30 carbon atoms, most preferably an unsubstituted alkyl group containing 10 to 20 carbon atoms. As specific examples of $R^1$, there may be mentioned such alkyl groups as a methylgroup, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group and an eicosyl group; cycloalkyl groups, for example a cyclohexyl group; such aryl groups as a phenyl group, a tolyl group, a xylyl group, a biphenyl group, a naphthyl group, an anthryl group and a phenanthryl group; and aralkyl groups, for example a benzyl group.

From the thermal stability, availability and plasticizing efficiency viewpoint, $R^2$ in the above general formula (1) is preferably a substituted or unsubstituted hydrocarbon group containing 1 to 40 carbon atoms, more preferably a substituted or unsubstituted alkyl or aryl group containing 1 to 40 carbon atoms, still more preferably a substituted or unsubstituted aryl group containing 6 to 40 carbon atoms, particularly preferably an unsubstituted aryl group containing 6 to 20 carbon atoms, As specific examples of $R^2$, there may be mentioned the same ones as those given above as specific examples of $R^1$.

As the organic sulfonic acid ester (C), there may specifically be mentioned aliphatic sulfonic acid alkyl esters such as ethyl hexanesulfonate, methyl decanesulfonate and butyl hexadecanesulfonate; aliphatic sulfonic acid phenyl esters such as phenyl hexanesulfonate, tolyl decanesulfonate and phenyl hexadecanesulfonate; aromatic sulfonic acid alkyl esters; and aromatic sulfonic acid phenyl esters, among others. Among those, aliphatic sulfonic acid alkyl esters and aliphatic sulfonic acid phenyl esters are preferred from the low melting point, low viscosity and high plasticizing efficiency viewpoint, and aliphatic sulfonic acid phenyl esters are more preferred from the thermal stability, availability and cost viewpoint.

As specific examples of the aliphatic sulfonic acid phenyl ester, there may be mentioned Mesamoll and Mesamoll II (both being products of Bayer), among others.

The organic sulfonic acid ester (C) to be used may comprise one single species or a combination of two or more species.

The molecular weight of the component (C) is preferably 100 to 3,000, more preferably 200 to 2,000, still more preferably 250 to 1,000, particularly preferably 300 to 500. When its molecular weight is excessively low, the plasticizer will be eluted by heat and/or rain with the lapse of time, so that the initial physical characteristics cannot be maintained for a long period of time. When the molecular weight is excessively high, the viscosity will rise, resulting in poor workability.

The number average molecular weight is determined by the GPC technique (on the polystyrene equivalent basis).

The level of incorporation of the component (C) is preferably 5 to 150 parts by weight, more preferably 10 to 120 parts by weight, still more preferably 20 to 100 parts by weight, per 100 parts by weight of the component (A). At levels below 5 parts by weight, the plasticizing effect may sometimes be minimal and, at levels exceeding 150 parts by weight, the cured products may be insufficient in mechanical strength in certain instances.

<Other additives>

In accordance with the first aspect, the (C) component organic sulfonic acid ester is used as a plasticizer and, in addition, another plasticize may also be used at levels which will not reduce the effects. As example of the plasticizer, there may be mentioned phthalic acid esters such as dibutyl phthalate, diheptyl phthalate, his(2-ethylhexyl) phthalate, and butyl benzyl phthalate; non-aromatic dibasic acid esters such as dioctyl adipate, dioctyl sebacate, dibutyl sebacate, and diisodecyl succinate; aliphatic esters such as butyl oleate and methyl acetylricinoleate; phosphoric acid esters such

as tricresyl phosphate and tributyl phosphate; trimellitic acid esters; polyethers free of any silicon-containing group capable of crosslinking under siloxane bond formation, such as polypropylene glycol; chloroparaffins; hydrocarbon oils such as alkyldiphenyl and partially hydrogenated terphenyl; processed oils; epoxy plasticizers such as epoxylated soybean oil and benzyl epoxystearate.

However, the addition of a carboxylic acid ester compound, for example a phthalate ester, a non-aromatic dibasic acid ester or an aliphatic ester, tends to cause an intensified decrease in curing rate during storage according to the level of addition thereof and, therefore, the level of addition of the carboxylic acid ester compound is preferably not higher than 30 parts by weight, more preferably not higher than 10 parts by weight, still more preferably not higher than 3 parts by weight, per 100 parts by weight of the component (A); substantial absence thereof is most preferred.

Further, the addition of a polyether free of any silicon-containing group capable of crosslinking under siloxane bond formation, for example polypropylene glycol, tends to lower the activity of the component (B) and decrease the curing rate according to the level of addition thereof and, therefore, the level of addition of such polyether is preferably not higher than 30 parts by weight, more preferably not higher than 10 parts by weight, still more preferably not higher than 3 parts by weight, per 100 parts by weight of the component (A) ; substantial absence thereof is most preferred.

The percentage of the component (C) to all plasticizers contained in the curable composition in accordance with the first aspect is preferably not lower than 50% by weight, more preferably not lower than 80% by weight, still more preferably not lower than 95%, particularly preferably not lower than 99% by weight. When the percentage is lower than 50%, it is difficult in some cases for the effects of the invention, namely the curability and storage stability improving effects, to be produced.

Further, a silicate may be used for the composition of the first aspect. The silicate works as a crosslinking agent and has a function of improving the recovery, durability, and creep resistance of the organic polymer of the component (A) of the invention. Further, it also has a function to improve the adhesion and water-proof adhesion, and adhesion durability at a high temperature and high humidity condition. Tetraalkoxysilane or partially hydrolyzed condensates of the tetraalkoxysilane may be used as the silicate. In the case where a silicate is used, the use amount thereof is preferably 0.1 to 20 parts by weight and more preferably 0.5 to 10 parts by weight per 100 parts by weight of the component (A).

Specific examples of the silicates are tetraalkoxysilanes (tetraalkyl silicates) such as tetramethoxysilane, tetraethoxysilane, ethoxytrimethoxysilane, dimethoxydiethoxysilane, methoxytriethoxysilane, tetra(n-propoxy)silane, tetra(iso-propoxy)silane, tetra(n-butoxy)silane, tetra(iso-butoxy)silane, and tetra(tert-butoxysilane), and their partially hydrolyzed condensates.

The partially hydrolyzed condensates of the tetraalkoxysilanes are more preferable since the condensates are more effective to improve the recovery, durability and creep resistance of the invention than tetraalkoxysilanes.

The above-mentioned partially hydrolyzed condensates of the tetraalkoxysilanes are obtained by a common method of adding water to a tetralkoxysilane and thereby partially hydrolyzing and condensing the tetraalkoxysilane. Further, commercialized products may be used as the partially hydrolyzed condensates of the organosilicate compounds. Examples of the condensates are Methyl silicate 51 and Ethyl silicate 40 (both manufactured by Colcoat Co., Ltd.), and the like.

A filler may be used for the composition of the first aspect. Examples of the filler may include reinforcing fillers such as fumed silica, precipitated silica, crystalline silica, fused silica, dolomite, silicic anhydride, hydrous silicic acid, and carbon black; fillers such as ground calcium carbonate, colloidal calcium carbonate, magnesium carbonate, china clay, calcined clay, clay, talc, titanium oxide, bentonite, organic bentonite, ferric oxide, aluminum fine powder, flint powder, zinc oxide, activated zinc white, shirasu balloon, glass microballoon, organic microballoon of phenol resins and vinylidene chloride resins, and resin powder such as PVC powder and PMMA powder; fibrous fillers such as asbestos, glass fibers and filaments; and the like. In the case where a filler is used, the use amount thereof is preferably 1 to 250 parts by weight and more preferably 10 to 200 parts by weight per 100 parts by weight of the component (A).

As described in Japanese Kokai Publication 2001-181532, the filler may be previously dehydrated and dried by evenly mixing the filler with a dehydration agent such as calcium oxide, enclosing the mixture in a bag made of an air-tight material, and leaving the bag for a proper duration. Use of the filler with lowered water content improves the storage stability particularly in the case of a one-pack composition.

In the case where a composition with high transparency is obtained, as described in Japanese Kokai Publication Hei-11-302527, a polymer powder derived from a polymer such as methyl methacrylate, amorphous silica or the like may be used as a filler. Also, as described in Japanese Kokai Publication 2000-38560, a composition with high transparency can be obtained by using hydrophobic silica, that is a micronized silicon dioxide bonded with hydrophobic groups on the surface, as a filler. Generally, silanol groups (-SiOH) form the surface of the micronized silicon dioxide and a hydrophobic silica is produced by forming (-SiO-hydrophobic group) by causing reaction of the silanol group with an organic silicon halide compound, alcohols and/or the like. Particularly, the silanol group on the surface of the micronized silicon dioxide is reacted and bonded with dimethylsiloxane, hexamethyldisilazane, dimethyldichlorosilane, trimethoxyoctylsilane, trimethylsilane or the like. The micronized silicon dioxide the surface of which is composed of silanol groups (-SiOH) is called as a micronized hydrophilic silica.

In the case of obtaining a cured product with high strength by using these fillers, it is preferable to use mainly a filler selected from fumed silica, precipitated silica, crystalline silica, fused silica, dolomite, silicic anhydride, hydrous silicic acid and carbon black, surface-treated fine calcium carbonate, calcined clay, clay, activated zinc white and the like and if it is used in a range from 1 to 200 parts by weight per 100 parts by weight of the component (A), a preferred result can be obtained. In the case where a cured product with low strength and high elongation at break is obtained, a preferred result can be attained by mainly using 5 to 200 parts by weight of a filler selected from titanium oxide, calcium carbonate such as ground calcium carbonate, magnesium carbonate, talc, ferric oxide, zinc oxide, shirasu balloon and the like per 100 parts by weight of the component (A). In general, calcium carbonate has more significant effect of improving the strength at break, elongation at break, and adhesion of a cured product, as it has higher specific surface area. These fillers may be used alone or two or more of the may be used as a mixture. In the case where calcium carbonate is used, it is desirable to use surface-treated fine calcium carbonate, ground calcium carbonate and the like calcium carbonate with large particle diameter in combination. The surface-treated fine calcium carbonate is preferable to have a particle diameter of 0.5 μm or smaller and surface-treated with a fatty acid or a fatty acid salt. Calcium carbonate with a large particle diameter is preferable to have a particle diameter of 1 μm or larger, and surface-untreated one may be used.

To improve the workability (antisagging property) of the composition and deluster the cured product surface, it is preferable to add an organic balloon and/or an inorganic balloon. These fillers may be surface-treated and may be used alone or two ore more of them may be used in combination. To improve the workability (antisagging property), the particle diameter of the balloons is preferable to be 0.1 mm or smaller. To deluster the cured product surface, the above-mentioned particle diameter is preferable to be 5 to 300 μm.

Because the composition of the first aspect gives the cured product with excellent chemical resistance, for example, the composition can be suitably applied to the joints of exterior walls of houses, such as siding boards, particularly ceramic siding boards, adhesives for exterior wall tiles, adhesives for exterior wall tiles that remain in joints as they are, and the like, but it is preferable to match the sealant design to the exterior wall design. As exterior walls, in particular, those with a deluge feeling created by spatter coating or incorporation of colored aggregates etc. become to be used. When a scaly or particulate substance preferably not less smaller 0.1 mm, more preferably about 0.1 to 5.0 mm, in diameter is formulated into the composition of the first aspect, the cured product matches up well with such deluxe-finished exterior walls and, in addition, shows good chemical resistance. Thus, the composition is enabled to give the cured product capable of retaining the appearance over years. When a particulate substance is formulated, a pebbled or sandstone-like coarse surface texture can be expressed. When a scaly substance is formulated, an irregular surface resulting from its scaly shape can be expressed.

As described in Japanese Kokai Publication Hei-9-53063, the diameter, addition amount, and materials desirable for the scaly or particulate substance are as follows.

The diameter is preferably 0.1 mm or larger and more preferably about 0.1 to 5.0 mm and may be selected properly in accordance with the material, the pattern, or the like of the exterior wall. Those substances with a diameter of about 0.2 to 5.0 mm or about 0.5 to 5.0 mm are also usable. In the case of a scaly substance, the thickness to the diameter is proper to be about 1/10 to 1/5 (that is, the diameter is proper to be about 0.01 to 1.00 mm). The scaly or particulate substance is previously mixed with a base material of sealant and transported to the working field as a sealant or mixed with the base material of sealant at the working field when used.

The scaly or particulate substance is added in a range from about 1 to 200 parts by weight per 100 parts by weight of the composition such as the sealant composition or the adhesive composition. The addition amount is properly selected in accordance with the size of the scaly or particulate substance, the material and patterns of the exterior wall, and/or the like.

Examples to be used as the scaly or particulate substance may be natural substances such as silica sand and mica; synthetic rubber, synthetic resins, and inorganic material such as alumina. To improve the design quality when the substance is used for filling the joint, the scaly or particulate substance is colored with a proper color matched with the material and patterns of the exterior wall, and the like.

A preferable finishing method is described in Japanese Kokai Publication Hei-9-53063.

Also, if a balloon (preferably those with an average particle diameter of 0.1 mm or larger) is used for the same purpose, the pebbled or sandstone-like coarse surface texture can be obtained and the weight can be reduced. As described in Japanese Kokai Publication Hei-10-251618, the diameter, the addition amount, and the type of a preferable balloon are as follows.

The balloon is a spherical filler having a hollow inside. The material of the balloon may be inorganic materials such as glass, shirasu, and silica; and organic materials such as phenol resins, urea resins, polystyrene, and Saran, however it is not limited to these examples and an inorganic material and an organic material may be compounded or layered to form a plurality of layers. Inorganic, or organic, or their composite balloons may be used, for example. Also, the balloon to be used may be a single type one or a plurality of kinds of balloons of different materials may be used as a mixture. Further, the surface of the balloon to be used may be processed or coated, or may be treated with various

kinds of surface treating agents. For example, an organic balloon may be coated with calcium carbonate, talc, titanium oxide, or the like; or an inorganic balloon may be surface-treated with a silane coupling agent.

To obtain the pebbled or sandstone-like coarse surface texture, the diameter of the balloon is preferably 0.1 mm or larger. The balloons having a diameter of about 0.2 to 5.0 mm or about 0.5 to 5.0 mm are also usable. In the case where the diameter is smaller than 0.1 mm, even if a large quantity of the balloon is added, it only results in increase of the viscosity of the composition and no coarse surface texture can be obtained in some cases. The addition amount of the balloon may be easily determined in accordance with the coarseness of the desired pebbled or sandstone-like texture. Generally, it is desirable to add the balloon having a diameter of 0.1 mm or larger in an amount of 5 to 25% by volume in the composition. If the concentration by volume of the balloon is lower than 5% by volume, no coarse surface texture can be obtained. If the concentration exceeds 25% by volume, there is a tendency of increasing the viscosity of the sealant and the adhesive, worsening the workability, increasing the modulus of the cured product, and thus deteriorating the basic properties of the sealant and adhesive. The concentration by volume is particularly preferably 8 to 22% by volume in terms of the balance with the basic properties of the sealant.

In the case of using balloons, it is allowed to use a slip preventing agent as described in Japanese Kokai Publication 2000-154368 and an amine compound, particularly a primary and/or a secondary amine with a melting point of 35°C or higher as described in Japanese Kokai Publication 2001-164237 for making the surface of a cured product uneven and delustered.

Specific examples of the balloon are described in Japanese Kokai Publication Hei-2-129262, Japanese Kokai Publication Hei-4-8788, Japanese Kokai Publication Hei-4-173867, Japanese Kokai Publication Hei-5-1225, Japanese Kokai Publication Hei-7-113073, Japanese Kokai Publication Hei-9-53063, Japanese Kokai Publication Hei-10-251618, Japanese Kokai Publication 2000-154368, Japanese Kokai Publication 2001-164237, WO 97/05201 and the like.

Also, thermally-expansive hollow microspheres described in Japanese Kokai Publication 2004-51701, Japanese Kokai Publication 2004-66749 and the like can be used. The phrase "the thermally-expansive hollow microspheres" means plastic spheres obtained by spherically enclosing low boiling point compounds such as a hydrocarbon with 1 to 5 carbon atoms by a polymer coating material (vinylidene chloride copolymer, an acrylonitrile copolymer, or a vinylidene chloride-acrylonitrile copolymer). Heating of the adhesion part formed using the composition of the invention increases the gas pressure in the coat of the thermally-expansive hollow microspheres and softens the polymer coating material to drastically expand the volume and separate the adhesion interface. Addition of the thermally-expansive hollow microspheres gives a thermally peelable adhesive composition which can be easily peeled by heating at the time of disposal without breaking materials and using any organic solvents.

Even in the case where the composition of the first aspect contains sealant-cured particles, the cured product can be provided with an uneven surface and an improved design. The diameter, addition amount, and usable materials etc. for the sealant-cured particles are preferable to be as described in Japanese Kokai Publication 2001-115142. The diameter is preferably 0.1 to 1 mm and more preferably about 0.2 to 0.5 mm. The addition amount is preferably in a range from 5 to 100% by weight and more preferably in a range from 20 to 50% by weight in the curable composition. The usable materials may be urethane resins, silicones, modified silicones, polysulfide rubber and the like and they are not particularly limited if they are usable for a sealant. Modified silicone type sealants are preferable.

The composition of the first aspect may contain a silane coupling agent, a reaction product of a silane coupling agent, or a compound other than the silane coupling agent as an adhesion promoter. Specific examples of the silane coupling agent are isocyanate group-containing silanes such as γ -isocyanatopropyltrimethoxysilane, γ-isocyanatopropyltriethoxysilane, γ -isocyanatopropylmethyldiethoxysilane, γ-isocyanatopropylmethyldimethoxysilane, isocyanatomethyltrimethoxysilane, isocyanatomethyltriethoxysilane, isocyanatomethyldimethoxysilane, and isocyanatomethyldiethoxymethylsilane; amino group-containing silanes such as γ -aminopropyltrimethoxysilane, γ-aminopropyltriethoxysilane, γ -aminopropyltriisopropoxysilane,γ -aminopropylmethyldimethoxysilane, γ-aminopropylmethyldiethoxysilane, γ -(2-aminoethyl)aminopropyltrimethoxysilane, γ -(2-aminoethyl)aminopropylmethyldimethoxysilane, γ -(2-aminoethyl)aminopropyltriethoxysilane, γ-(2-aminoethyl)aminopropylmethyldiethoxysilane, γ -(2-aminoethyl)aminopropyltriisopropoxysilane, γ -(2-(2-aminoethyl)aminoethyl)aminopropyltrimethoxysilane, γ -(6-aminohexyl)aminopropyltrimethoxysilane, 3-(N-ethylamino)-2-methylpropyltrimethoxysilane, 2-aminoethylaminomethyltrimethoxysilane, N-cyclohexylaminomethyltriethoxysilane, N-cyclohexylaminomethyldiethoxymethylsilane, γ -ureidopropyltrimethoxysilane, γ -ureidopropyltriethoxysilane, N-phenyl-γ-aminopropyltrimethoxysilane, N-phenylaminomethyltrimethoxysilane, N-benzyl-γ-aminopropyltrimethoxysilane, and N-vinylbenzyl-γ-aminopropyltriethoxysilane, mercapto group-containing silanes such as γ-mercaptopropyltrimethaxysilane, γ -mercaptopropyltriethoxysilane, γ-mercaptopropropylmethyldimehtoxysilane, γ-mercaptopropylmethyldiethoxysilane, mercaptomethyltrimethoxysilane, and mercaptomethyltriethoxysilane; epoxy group-containing silanes such as γ -giycidoxypropyltrimethoxysilane, γ-glycidoxypropyltriethoxysilane, γ -glycidoxypropylmethyldimethoxysilane, β -(3,4-epoxycyclohexyl)ethyltrimethoxysilane, and β -(3,4-epoxycyclohexyl)ethyltriethoxysilane; carboxysilanes such as β-carboxyethyltriethoxysilane, β -carboxyethylphenylbis(2-methoxyethoxy)silane, and N-β-(carboxymethyl)aminoethyl-γ-aminopropyltrimethoxysilane ; vinyl type unsaturated group-containing silanes such as vinyltrimethoxysilane, vinyltriethoxysilane, γ -methacryloyloxypropylmethyldimethoxysilane, γ-acryloyloxypropyltriethoxysilane, and methacryloxymethyltrimethoxysilane; halogen-containing silanes such as γ-chloropropyltrimethoxysilane; isocyanurate silanes such as tris(3-trimethoxysilylpropyl)isocyanurate; and the like. Examples usable as the silane coupling agent may also include modified derivatives of these exemplified compounds such as amino-modified silyl polymers, silylated aminopolymers, unsaturated aminosilane complexes, phenylamino-long chain alkylsilane, aminosilylated silicones, and silylated polyesters. Examples of the reaction product of the silane coupling agent are reaction products of the above-mentioned aminosilanes and epoxysilanes, reaction products of the aminosilanes and isocyanate silanes, partially condensed silane coupling agents, and the like. Preferably, the silane coupling agent to be used in the first aspect is used generally in a range from 0.1 to 20 parts by weight per 100 parts by weight of the component (A). It is more preferable to be used in a range from 0.5 to 10 parts by weight.

The effect of the silane coupling agent to be added to the curable composition of the first aspect is to remarkably improve the adhesiveness in a non-primer condition or primer condition in the case of using the composition of the invention for various kinds of adherends, that is, inorganic substrates such as glass, aluminum, stainless steel, zinc, copper, and mortar and organic substrates such as polyvinyl chloride, acrylic polymer, polyester, polyethylene, polypropylene, and polycarbonate. In the case where the composition is used in the non-primer condition, the effect to improve the adhesiveness to various kinds of adherends is particularly significant.

Examples of the adhesion promoter other than the silane coupling agents are not particularly limited and for example, epoxy resins, phenol resins, sulfur, alkyl titanates, aromatic polyisocyanate and the like may be exemplified. The above-exemplified adhesion promoters may be used alone or two or more of them may be used as a mixture. Addition of these adhesion promoters can improve the adhesiveness to the adherend.

The composition of the first aspect may contain a tackfier. The tackfier is not particularly limited and commonly used ones may be used regardless of the phase thereof being solid or liquid at an ambient temperature. Specific examples thereof may be styrene block copolymers, hydrogenated products thereof, phenol resins, modified phenol resins (e.g. cashew oil-modified phenol resins, tall oil-modified phenol resins, and the like), terpene phenol resins, xylene-phenol resins, cyclopentadiene-phenol resins, cumarone indene resins, rosin resins, rosin ester resins, hydrogenated rosin ester resins, xylene resins, low molecular weight polystyrene resins, styrene copolymer resins, petroleum resins (e.g., C5 hydrocarbon resins, C9 hydrocarbon resins, C5 hydrocarbon-C9 hydrocarbon copolymer resins, and the like), hydrogenated petroleum resins, terpene resins, DCPD resins petroleum resins, and the like. They may be used alone and two or more of them may be used in combination. Examples of the styrene block copolymers and the hydrogenated products thereof are styrene-butadiene-styrene block copolymer (SBS), styrene-isoprene-styrene block copolymer (SIS), styrene-ethylene-butylene-styrene block copolymer (SEBS), styrene-ethylene-propylene-styrene block copolymer (SEPS), styrene-isobutylene-styrene block copolymer (SIBS), and the like. The above-mentioned tackfier s may be used alone or two or more of them may be used in combination.

The tackfier may be preferably used in a range from 5 to 1,000 parts by weight and more preferably 10 to 100 parts by weight per 100 parts by weight of the component (A).

The composition of the first aspect may contain a solvent or a diluent. The solvent or diluent is not particularly limited and aliphatic hydrocarbons, aromatic hydrocarbons, alicyclic hydrocarbons, halogenated hydrocarbons, alcohols, esters, ketones, ethers and the like may be used. In the case where a solvent or diluent is used, in terms of a problem of air pollution at the time of using the composition indoors, the boiling point of the solvent is preferably 150°C or higher, more preferably 200°C or higher, and further preferably 250°C or higher. The above-mentioned solvents or diluents may be used alone or two or more of them may be used in combination.

Based on the necessity, the curable composition of the first aspect may contain a physical property modifier for adjusting tensile properties of the cured product to be obtained. The physical property modifier is not particularly limited and examples thereof are alkylalkoxysilanes such as methyltrimethoxysilane, dimethyldimethoxysilane, trimethylmethoxysilane, and n-propyltrimethoxysilane; alkylisopropenoxysilanes such as dimethyldiisopropenoxysilane, methyltriisopropenoxysilane, γ-glycidoxypropylmethyldiisopropenoxysilane; functional group-containing alkoxysilanes such as γ -glycidoxypropylmethyldimethoxysilane, γ-glycidoxypropyltrimethoxysilane, vinyltrimethoxysilane, vinyldimethylmethoxysilane, γ-aminopropyltrimethoxysilane, N-β-aminoethyl)aminopropylmethyldimethoxysilane, γ-mercaptopropyltrimethoxysilane, γ-mercaptopropylmethyldimethoxysilane; silicone vanishes; polysiloxanes; and the like. Use of the above-mentioned physical property modifiers increases the hardness of the cured product obtained by curing the composition of the first aspect, or, on the contrary, decreases the hardness in order to increase the elongation at break. The above-mentioned physical property modifiers may be used alone or two or more of them may be used in combination.

Particularly, a compound from which a compound containing a monovalent silanol group in a molecule is produced by hydrolysis has a function of decreasing the modulus of the cured product without worsening the stickiness of the surface of the cured product. Particularly, a compound from which trimethylsilanol is produced is preferable. Examples of the compound from which a compound containing a monovalent silanol group in a molecule is produced by hydrolysis are compounds described in Japanese kokai Publication Hei-5-117521. Further, examples of the compound may include derivatives of alkylalcohols, such as hexanol, octanol and decanol, from which silicon compounds forming $R_3SiOH$ such as trimethylsilanol are produced by hydrolysis; derivatives of polyhydric alcohols having 3 or more hydroxyl

groups, such as trimethylolpropane, glycerin, pentaerythritol and sorbitol, as described in Japanese Kokai Publication Hei-11-241029, from which silicone compounds forming $R_3SiOH$ such as trimethylsilanol are produced by hydrolysis.

Examples may further include oxypropylene polymer derivatives as described in Japanese Kokai Publication Hei-7-258534 from which silicon compounds forming $R_3SiOH$ such as trimethylsilanol are produced by hydrolysis. Usable examples may also include polymers having a silicon-containing group to be converted into monosilanol-containing compounds by hydrolysis with a crosslinkable and hydrolysable silicon-containing group, as described in Japanese Kokai Publication Hei-6-279693.

The physical property modifier is preferably used in a range from 0.1 to 20 parts by weight and more preferably from 0.5 to 10 parts by weight per 100 parts by weight of the component (A).

The curable composition of the first aspect may contain a thixotropic agent (antisagging agent) for preventing sagging in order to improve the workability, according to need. The antisagging agent is not particularly limited and polyamide waxes; hydrogenated castor oil derivatives; metal soaps such as calcium stearate, aluminum stearate, and barium stearate; and the like. Further, if rubber powders with a particle diameter of 10 to 500 μm as described in Japanese Kokai Publication Hei-11-349916 and/or organic fibers as described in Japanese Kokai Publication 2003-155389 are used, the composition with high thixotropy and good workability can be obtained. These thixotropic agents (antisagging agents) may be used alone or two or more of them may be used in combination. The thixotropic agent may be used in a range from 0.1 to 20 parts by weight per 100 parts by weight of the component (A).

The composition of the first aspect may contain a compound having an epoxy group in one molecule. Addition of the compound having an epoxy group increases the restorability of the cured product. Examples of the compound having an epoxy group may include epoxylated unsaturated fats and oils, epoxylated unsaturated fatty acid esters, alicyclic epoxy compounds and epichlorohydrin derivatives, mixtures of these compounds, and the like. More particular examples thereof are epoxylated soybean oils, epoxylated linseed oil, bis(2-ethylhexyl)-4,5-epoxycyclohexane-1,2-dicarboxylate (E-PS), epoxyoctyl stearate, epoxybutyl stearate and the like. E-PS is particularly preferable among them. The epoxy compound is preferable to be used in a range from 0.5 to 50 parts by weight per 100 parts by weight of the component (A).

The composition of the first aspect may contain a photocurable substance. Addition of the photocurable substance makes it possible to form a coating of the photocurable substance on the cured product surface and to improve the stickiness and weather resistance of the cured product. The photocurable substance is a compound causing chemical changes in the molecular structure within a very short time by light radiation and thereby causing changes in physical properties such as curing. This kind of compounds is known well in form of an organic monomer, an oligomer, a resin, a composition containing them, and many others. All kinds of commercialized products may be used. Typical examples thereof are unsaturated acrylic compounds, polyvinyl cinnamates, azido resins and the like. The unsaturated acrylic compounds may include monomers and oligomers having one or several acrylic or methacrylic unsaturated groups, and mixtures thereof; e.g. monomers and oligoesters with a molecular weight of 10,000 or lower, such as propylene (or butylene, or ethylene) glycol di(meth)acrylate and neopentyl glycol di(meth)acrylate, and the like. As more specific examples, there may be mentioned such special acrylates (difunctional) as ARONIX M-210, ARONIX M-215, ARONIX M-220, ARONIX M-233, ARONIX M-240, and ARONIX M-245; such trifunctional ones as ARONIX M-305, ARONIX M-309, ARONIX M-310, ARONIX M-315, ARONIX M-320, and ARONIX M-325; such polyfunctional ones as ARONIX M-400; and the like. Compounds containing an acrylic functional group are particularly preferable and compounds containing 3 or more functional groups on average in one molecule are more preferable. (All the above-mentioned ARONIX species are products of Toagosei Co., Ltd.)

Examples of the polyvinyl cinnamates are photosensitive resins having a cinnamoyl group as a photosensitive group and obtained by esterifying a polyvinyl alcohol with a cinnamic acid and many polyvinyl cinnamate derivatives as well. The azido resins are known as photosensitive resins having an azido group as a photosensitive group and in general, may include photosensitive rubber liquids obtained by adding a diazido compound as a photosensitizer, and further, detailed examples are found in "Kankosei Jushi (Photosensitive Resins)" (published March 17, 1972 by Insatsu Gakkai Shuppanbu, pages 93 ff, 106 ff, 117 ff). They may be used alone or as a mixture and if necessary, a sensitizer may be added. In the case where a sensitizer such as ketones and nitro compounds or a promoter such as amines is added, the effect is improved in some cases. The photocurable substance is preferably used in a range from 0.1 to 20 parts by weight and more preferably in a range from 0.5 to 10 parts by weight per 100 parts by weight of the component (A). If it is lower than 0.1 parts by weight, no effect to increase the weather resistance may be caused and if it exceeds 20 parts by weight, the cured product tends to become so hard to cause cracks.

The composition of the first aspect may contain an oxygen-curable substance. The oxygen-curable substance may include unsaturated compounds reactive on oxygen in the air and has function of forming a cured coating in the vicinity of the cured product surface by reaction with oxygen in the air and thereby preventing stickiness of the surface and adhesion of the dust and dirt to the cured product surface. Specific examples of the oxygen-carable substance are dry oils represented by tung oil and linseed oil and various kinds of alkyd resins obtained by modifying these compounds; acrylic polymers, epoxy resins, and silicon resins modified by dry oils; liquid polymers such as polymers of 1,2-polybutadiene, 1,4-polybutadiene, C5-C8 diene obtained by polymerization or copolymerization of diene compounds such as butadiene, chloroprene, isoprene, and 1,3-pentadiene, liquid copolymers such as NBR and SBR obtained by copolymerization of the diene compounds with a copolymerizable monomer such as acrylonitrile and stylene in a manner that the diene compounds form main components, various modified compounds of them (e.g. maleated derivatives, boiled oil-modified derivatives, and the like), and the like. They may be used alone or two or more of them may be used in combination. Tung oil and liquid diene polymers are particularly preferable among them. Further, combination use of a catalyst promoting the oxidation curing reaction or a metal drier may increase the effect in some cases. Examples of the catalyst and the metal drier are metal salts such as cobalt naphthenate, lead naphthenate, zirconium naphthenate, cobalt octylate, and zirconium octylate, amine compounds, and the like. The use amount of the oxygen-curable substance is in a range preferably from 0.1 to 20 parts by weight and more preferably from 0.5 to 10 parts by weight per 100 parts by weight of the component (A). If the use amount is lower than 0.1 parts by weight, the contamination improvement effect becomes insufficient and if it exceeds 20 parts by weight, the tensile property and the like of the cured product tends to be deteriorated. As described in Japanese Kokai Publication Hei-3-160053, the oxygen-curable substance may be used preferably in combination with the photocurable substance.

The composition of the first aspect may contain an antioxidant (anti-aging agent). If the antioxidant is used, the heat resistance of the cured product can be increased. Examples of the antioxidant are hindered phenol-type antioxidants, monophenol-type antioxidants, bisphenol-type antioxidants, and polyphenol-type antioxidants, and hindered phenol-type antioxidants are particularly preferable. Similarly, usable examples thereof are hindered amine-type light stabilizers commercialized as TINUVIN 622LD, TINUVIN 144, CHIMASSORB 944LD, and CHIMASSORB 119FL (all manufactured by Ciba Specialty Chemicals), MARK LA-57, MARK LA-62, MARK LA-67, MARK LA-63, and MARK LA-68 (all manufactured by Adeka Argus Chemical Co., Ltd.), Sanol LS-770, Sanol LS-765, Sanol LS-292, Sanol LS-2626, Sanol LS-1114, and Sanol LS-744 (all manufactured by Sankyo Co., Ltd.). Specific examples of the antioxidant are also described in Japanese Kokai Publication Hei-4-283259 and Japanese Kokai Publication 9-194731. The use amount of the antioxidant is in a range preferably from 0.1 to 10 parts by weight and more preferably from 0.2 to 5 parts by weight per 100 parts by weight of the component (A).

The composition of the first aspect may contain a light stabilizer. If the light stabilizer is used, the photo-oxidation deterioration of the cured product can be prevented. Examples to be used as the light stabilizer may include benzotriazole compounds, hindered amine compounds, benzoate compounds and the like, and hindered amine compounds are particularly preferable. The use amount of the light stabilizer is in a range preferably from 0.1 to 10 parts by weight and more preferably from 0.2 to 5 parts by weight per 100 parts by weight of the component (A). Specific examples of the light stabilizer are also described in Japanese Kokai Publication Hei-9-194731.

In the case where the photocurable substance is added to the composition of the first aspect, particularly in the case where an unsaturated acrylic acid compound is added, it is preferable to use a tertiary amine-containing hindered amine-type light stabilizer as described in Japanese Kokai Publication Hei-5-70531 as the hindered amine-type light stabilizer in terms of the improvement of the storage stability of the composition. Examples of the tertiary amine-containing hindered amine-type light stabilizer are TINUVIN 622LD, TINUVIN 144, and CHIMASSORB 119FL (all manufactured by Ciba-Geigy of Japan); MARK LA-57, LA-62, LA-67, and LA-63 (all manufactured by Adeka Argus Chemical Co., Ltd.); Sanol LS-765, LS-292, LS-2626, LS-1114, and LS-744 (all manufactured by Sankyo Co., Ltd.); and the like stabilizers.

The composition of the first aspect may contain an ultraviolet absorber. Use of the ultraviolet absorber can increase the weather resistance of the surface of the cured product. Examples of the ultraviolet absorber may be benzophenone compounds, benzotriazole compounds, salicylate compounds, substituted tolyl compounds, metal chelate compounds and the like, and benzotriazole compounds are particularly preferable. The use amount of the ultraviolet absorber is preferably in a range from 0.1 to 10 parts by weight and more preferably from 0.2 to 5 parts by weight per 100 parts by weight of the component (A). It is preferable to use a phenol-type or hindered phenol-type antioxidant, a hindered amine-type light stabilizer, and a benzotriazole-type ultraviolet absorber in combination.

The composition of the first aspect may contain an epoxy resin. The composition that contains the epoxy resin is preferable to be used as an adhesive, particularly as an adhesive for exterior wall tiles. Examples of the epoxy resin are epichlorohydrin-bisphenol A epoxy resins, epichlorohydrin-bisphenol F epoxy resins, flame-retardant epoxy resins such as tetrabromobisphenol A glycidyl ether, novolak epoxy resins, hydrogenated bisphenol A epoxy resins, glycidyl ether epoxy resins of a bisphenol A propyleneoxide adduct, p-oxybenzoic acid glycidyl ether ester epoxy resins, m-aminophenol epoxy resins, diaminodiphenylmethane epoxy resins, urethane-modified epoxy resins, various kinds of alicyclic epoxy resins, N,N-diglycidylaniline, N,N-diglycidyl-o-toluidine, triglycidyl isocyanurate, polyalkylene glycol diglycidyl ether, glycidyl ether of polyhydric alcohols such as glycerin, hydantoin epoxy reins, epoxies of unsaturated polymers such as petroleum resins, and the like, however the epoxy resin is not limited to these examples and commonly used epoxy resins are all usable. Those having two or more epoxy groups in a molecule have high reactivity at the time of curing and make the cured product easy to form a three-dimensional mesh structure, and therefore they are preferable. More preferable examples thereof are bisphenol A epoxy resins, novolak epoxy resins and the like. The use ratio of these epoxy resins and the component (A) of the invention is preferably in a range from (100/1) to (1/100) on the basis

of (A)/(epoxy resins) by weight. If the ratio (A)/(epoxy resins) is lower than 1/100, it becomes difficult to cause an effect of improving the impact strength and strong toughness of the epoxy resin cured product and if the ratio (A)/(epoxy resins) exceeds 100/1, the strength of the cured product becomes insufficient. A preferable use ratio cannot be defined clearly since it depends on the uses of the resin curing composition, however in the case of improving impact resistance, flexibility, strong toughness, peel strength and the like of the epoxy resin cured product, the component (A) is preferably in a range from 1 to 100 parts by weight and more preferably from 5 to 100 parts by weight per 100 parts by weight of the epoxy resins. On the other hand, in the case of improving strength of the cured product of the first aspect, the epoxy resins are preferably used in a range from 1 to 200 parts by weight and more preferably from 5 to 100 parts by weight per 100 parts by weight of the component (A).

In the case where the epoxy resin is added, the composition of the first aspect may naturally contain a curing agent for curing the epoxy resin. Examples of the epoxy resin curing agent are not particularly limited and commonly used epoxy resin curing agents may be used. Specific examples thereof are primary and secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophoronediamine, amine-terminated polyethers; tertiary amines such as 2,4,6-tris(dimethylaminomethyl)phenol, and tripropylamine and salts of these tertiary amines; polyamide resins; imidazoles; dicyanodiamides; boron trifluoride complex compounds; carboxylic anhydrides such as phthalic anhydride, hexahydrophthalic anhydride, tetrahydrophthalic anhydride, dodecinyl succinic anhydride, pyromellitic anhydride, and chlorendic anhydride; alcohols; phenols; carboxylic acids; diketone complexes of aluminum or zirconium; and the like compounds, however the epoxy resin is not limited to these examples and the curing agent is used alone or two or more of them are used in combination.

In the case of using the curing agent for the epoxy resin, the use amount is preferably in a range from 0.1 to 300 parts by weight per 100 parts by weight of the epoxy resin.

A ketimine may be used as the curing agent for the epoxy resin. The ketimine exists stably in water-free state, and is decomposed into a primary amine and a ketone by water and the produced primary amine is a curing agent for the epoxy resin curable at a room temperature. If the ketimine is used, the one-pack composition may be obtained. The ketimine can be obtained by condensation reaction of an amine compound and a carbonyl compound.

Synthesis of the ketimine may be carried out using a conventionally known amine compound and carbonyl compound and examples of the amine compound are diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine, and p,p'-biphenylenediamine; polyamines such as 1,2,3-triaminopropane, triaminobensene, tris(2-aminoethyl)amine, and tetrakis(aminomethyl)methane; polyalkylene polyamines such as diethylenetriamine, triethylenetriamine, and tetraethylenepentamine; polyoxyalkylene polyamines; aminosilanes such as γ-aminopropyltriethoxysilane, γ -(β-aminoethyl)-γ-aminopropyltrimethoxysilane, and N-(β-aminaethyl)-γ-aminopropylmethyldimethoxysilane; and the like. Examples of the carboxyl compound are aldehydes such as acetaldehyde, propionaldehyde, n-butylaldehyde, isobutylaldehyde, diethylacetaldehyde, glyoxal, and benzaldehyde; cyclic ketones such as cyclopentanone, trimethylcyclopentanone, cyclohexanone, and trimethylcyclohexanone; aliphatic ketones such as acetone, methyl ethyl ketone, methyl propyl ketone, methyl isopropyl ketone, methyl isobutyl ketone, diethyl ketone, dipropyl ketones, diisopropyl ketone, dibutyl ketone, and diisobutyl ketone; β-dicarbonyl compounds such as acetyl acetone, methyl acetoacetate, ethyl acetoacetate, dimethyl malonate, diethyl malonate, methyl ethyl malonate, and dibenzoylmethane; and the like.

In the case where an imino group exists in the ketimine, the imino group may be reacted with styrene oxide; glycidyl ethers such as butyl glycidyl ether and allyl glycidyl ether; glycidyl esters; and the like. The above-mentioned ketimines may be used alone or two or more of them may be used in combination. The use amount of the ketimine is preferably in a range from 1 to 100 parts by weight per 100 parts by weight of the epoxy resin and it differs depending on the types of the epoxy resin and ketimine.

The curable composition of the first aspect may contain a flame retardant, for example, phosphorus-type plasticizer such as ammonium polyphosphate and tricresyl phosphate, aluminum hydroxide, magnesium hydroxide, and thermally expansive graphite. The above-mentioned flame retardant may be used alone or two or more of them may be used in combination.

The flame retardant is preferably used in a range from 5 to 200 parts by weight and more preferably from 1 to 100 parts by weight per 100 parts by weight of the component (A).

The curable composition of the first aspect may contain various kinds of additives for adjusting the various physical properties of the curable composition or the cured product of the composition according to need. Examples of the additives are a curability adjustment agent, a radical inhibitor, a metal inactivation agent, an ozone deterioration-preventing agent, a phosphorus-type peroxide decomposing agent, a lubricant, a pigment, a foaming agent, a repellent for ants, anti-fungal agent and the like. These various additives may be used alone or two or more of them may be used in combination. Specific examples other than the examples of the additives described in this specification are described in Japanese Kokoku Publication Hei-4-69659, Japanese Kokoku Publication Hei-7-103928, Japanese Kokai Publication

Sho-63-254149, Japanese Kokai Publication Sho-64-22904, Japanese Kokai Publication 2001-72854 and the like.

The curable composition of the first aspect may be produced as a one-pack formulation, which is to be cured by the moisture in the air after application, by compounding all the components/ingredients and tightly sealing in a container for storage, or as a two-pack type formulation by separately mixing, as curing agents, components such as a curing catalyst, a filler, a plasticizer, and water and mixing the mixture with a polymer composition together prior to use. In terms of the workability, the one-pack is preferable.

In the case where the curable composition is one-pack, since all of the components are previously mixed, it is preferable to previously dehydrate and dry the components containing water prior to use or to carry out dehydration by vacuum etc. during the components are kneaded. In the case where the curable composition is two-pack type, gelation hardly occurs if a slight amount of water is contained in the component mixture, since there is no need to add a curing catalyst to the base components containing the polymer having a silicon-containing group capable of crosslinking under siloxane bond formation. However, in the case where long term storage stability is required, it is preferable to carry out dehydration and drying. In the case where the composition is a powder or the like solid, the dehydration and drying method is preferably heat drying and in the case where it is liquid, vacuum dehydration or dehydration using a synthetic zeolite, activated alumina, silica gel, burnt lime, magnesium oxide or the like is preferable. Alternatively, a small amount of an isocyanate compound may be added to cause reaction of the isocyanate group and water for dehydration. Further, an oxazolidine compound such as 3-ethyl-2-methyl-2-(3-methylbutyl)-1,3-oxazolidi-ne may be added to cause reaction with water for dehydration . In addition to the above-mentioned dehydration and drying methods, the storage stability is further improved by adding a lower alcohol such as methanol and ethanol; and an alkoxysilane such as n-propyltrimethoxysilane, vinyltrimethoxysilane, vinylmethyldimethoxysilane, methyl silicate, ethyl silicate, γ-mercaptopropylmethyldimethoxysilane, γ -mercaptopropylmethyldiethoxysilane, and γ -glycidoxypropyltrimethoxysilane.

The use amount of a dehydration agent, particularly a silicon compound reactive with water such as vinyltrimethoxysilane is preferably in a range from 0.1 to 20 parts by weight and more preferably from 0.5 to 10 parts by weight per 100 parts by weight of the component (A).

The method for producing the curable composition of the first aspect is not particularly limited and a common method may be employed which involves, for example, formulating the above-mentioned components , kneading the components by a mixer, a roll, a kneader or the like at an ambient temperature or under heating condition; or dissolving the components by adding a small amount of a proper solvent for mixing.

When the curable composition of the first aspect is exposed to the atmosphere, the composition forms a three-dimensional mesh structure by reaction with moisture and then is cured into a solid having rubber-like elasticity.

(Second Aspect)

In the second aspect, herein it is described an organotin-free curable composition which comprises an organic polymer having a silicon-containing group capable of crosslinking under siloxane bond formation and a specific silanol condensation catalyst. The term "organotin-free curable composition" as used herein means a curable composition which does not substantially contain any organotin compound.

<Component (A): organic polymer having a silicon-containing group capable of crosslinking under siloxane bond formation>

The component (A) to be used in accordance with the second aspect may be the same one as described hereinabove referring to the first aspect. The silicon-containing group capable of crosslinking under siloxane bond formation, which is to be employed, may also be the same as described hereinabove referring to the first aspect.

<Component (D): carboxylic acid ester>

Herein a carboxylic acid ester (D) is used as the plasticizer. Generally, the viscosity and slump characteristics of a curable composition as well as the mechanical characteristics, such as tensile strength and elongation, of cured products obtained by curing of the composition can be adjusted by adding a plasticizer to the curable composition. The component (D) is inexpensive, high in plasticizing efficiency, low in volatility, excellent in flexibilizing effect and excellent in low temperature fluidity, so that it is a plasticizer excellent in performance characteristics balance. It has been revealed, however, that when the carboxylic acid metal salt (b1) and/or carboxylic acid (b2) to be described later herein is used as a curing catalyst for the one-pack curable composition which comprises an organic polymer (A) having a silicon-containing group capable of crosslinking under siloxane bond formation and a carboxylic acid ester (D), curing retardation occurs during storage of the one-pack curable composition under high-temperature conditions or for a prolonged period of time. Further, it has been revealed that this curing retardation problem is particularly remarkable when the primary amine to be mentioned later herein is used as a cocatalyst or promoter for silanol condensation curing.

This curing retardation phenomenon is probably caused in the following manner: the transesterification reaction proceeds between the carboxylic acid ester (D) and the carboxylic acid metal salt (b1) and/or carboxylic acid (b2) in the component (B) during a long period of storage and, as a result, the amount of the highly active carboxylic acid in the composition is lowered.

On the other hand, it has been found that the use of a polyether plasticizer such as polypropylene glycol in the one-pack curable composition which comprises the component (A) and component (B) reduces the catalytic activity of the component (B) and thus lowers the curing rate, thus causing a problem.

Therefore, in accordance with this aspect, the compound (E) to be described later herein which contains an imino group and contains no $-NH_2$ group nor silicon-containing group capable of crosslinking under siloxane bond formation is used as a silanol condensation curing cocatalyst or promoter, whereby the transesterification reaction during storage is inhibited and the highly active carboxylic acid can remain even after storage and, thus, a curing retardation alleviating effect can be obtained. As a result, rapid curability and storage stability can both be attained simultaneously.

The carboxylic acid ester (D) preferably has a molecular weight of 170 to 1,500, more preferably 250 to 1,000, still more preferably 350 to 700, particularly preferably 380 to 500. When the molecular weight is lower than 170, there is a tendency toward decreased volatilization resistance and, when it is in excess of 1,500, there is a tendency toward poor compatibility with component (A) and decreased plasticizing efficiency.

The carboxylic acid ester (D) preferably has a pour point of not higher than 20ºC, more preferably not higher than 0ºC, still more preferably not higher than -20ºC, particularly preferably not higher than -40ºC, as determined according to JIS K 2269. When the pour point is higher than 20ºC, there is a tendency toward ready freezing in winter, hence a tendency for the resulting composition to become poor in workability.

As the carboxylic acid ester (D), there may be mentioned phthalate esters such as dibutyl phthalate, diheptyl phthalate, di (2-ethylhexyl) phthalate, di-n-octyl phthalate, diisononyl phthalate, diisodecyl phthalate, diisoundecyl phthalate, di-n-undecyl phthalate and butyl benzyl phthalate; terephthalate esters such as di(2-ethylhexyl) terephthalate; non-aromatic dibasic acid esters such as di(2-ethylhexyl) adipate, di-n-octyl adipate, diisononyl adipate, diisodecyl adipate, di(2-ethylhexyl) sebacate, dibutyl sebacate, di (2-ethylhexyl) azelate and diisodecyl succinate; aliphatic esters such as butyl oleate and methyl acetylricinoleate; trimellitate esters such as tri (2-ethylhexyl) trimellitate and triisodecyl trimellitate; and other esters such as di(2-ethylhexyl) tetrahydrophthalate, epoxidized soybean oil, epoxidized linseed oil, di (2-ethylhexyl) 4,5-epoxyhexahydrophthalate and benzyl epoxystearate. Among them, the phthalate esters, non-aromatic dibasic acid esters and trimellitate esters are preferred from the viewpoint of plasticizing efficiency, availability, cost, and volatilization resistance, the phthalate esters and trimellitate esters are more preferred from the viewpoint of storage stability and volatilization resistance, and the phthalate esters are particularly preferred.

The carboxylic acid ester (D) to be used may comprise one single species or a combination of two or more species.

The level of addition of the component (D) is preferably 5 to 150 parts by weight, more preferably 10 to 120 parts by weight, still more preferably 20 to 100 parts by weight, per 100 parts by weight of the (A) component polymer. At levels below 5 parts by weight, the plasticizing effect will be not significant and, at levels exceeding 150 parts by weight, the cured products will be insufficient in mechanical strength.

<Component (B): carboxylic acid metal salt (b1) and/or carboxylic acid (b2)>

In accordance with the second aspect as well, a carboxylic acid metal salt (b1) and/or a carboxylic acid (b2) is used as the component (B).

The carboxylic acid metal salt and carboxylic acid are not particularly restricted but may include various compounds. Specific examples of the carboxylic acid metal salt (b1) and carboxylic acid (b2) are as enumerated hereinabove.

<Component (E): compound having an imino group and having no $-NH_2$ group nor silicon-containing group capable of crosslinking under siloxane bond formation>

In accordance with this aspect, a compound containing an imino group (divalent substituent -NH- bound to two different carbon atoms) and having no $-NH_2$ group nor silicon-containing group capable of crosslinking under siloxane bond formation (hereinafter sometimes referred to as "secondary amine") is used as the component (E) . The component (E) functions as a cocatalyst or promoter for enhancing the catalytic activity of the component (B).

If an amine compound having no amino group nor imino group nor silicon-containing group capable of crosslinking under siloxane bond formation (hereinafter sometimes referred to as "tertiary amine"), for example triethyamine or trihexylamine, is used in lieu of the component (E), the catalytic activity improving effect will be insignificant; hence, no practical curability can be obtained.

The use, in lieu of compound (E), of a compound containing an amino group and having no silicon-containing group capable of crosslinking under siloxane bond formation (hereinafter sometimes referred to as "primary amine"),

for example laurylamine or 3-diethylaminopropylamine produces a marked catalytic activity improving effect but, when it is used in combination with the carboxylic acid ester (D) which is to be used according to the invention, the curability shows a marked tendency towards decreasing during storage.

When the component (E) is used as a cocatalyst or promoter for the component (B) and combined with the carboxylic acid ester (D), one-pack curable compositions with good curability and showing little decrease in curability after storage can be obtained.

Furthermore, the component (E) tends to provide better adhesive properties as compared with the use of a primary amine . It produces a marked adhesive property improving effect in adhesion to organic resin adherends such as polycarbonates, acrylic resins and vinyl chloride resins, and the adhesive property improving effect is significant in adhesion to polycarbonate adherends, in particular.

As the component (E), there may be mentioned compounds represented by the general formula (2):

$$R^3NHR^4 \qquad (2)$$

(wherein $R^3$ and $R^4$ each independently represents a substituted or unsubstituted hydrocarbon group containing 1 to 40 carbon atoms or $R^3$ and $R^4$ may be linked together to form a ring system.)

From the viewpoint of compatibility with the component (A), availability and/or curability, $R^3$ and $R^4$ in the above general formula (2) each is preferably a substituted or unsubstituted alkyl, cycloalkyl or aralkyl group, more preferably an unsubstituted alkyl, cycloalkyl or aralkyl group, still more preferably an unsubstituted alkyl group, particularly preferably an unsubstituted straight-chain allyl group. The number of carbon atoms in each of $R^3$ and $R^4$ is preferably 4 to 30, more preferably 6 to 20, particularly preferably 8 to 18, from the viewpoint of compatibility with the component (A), availability and/or curability. As specific examples of $R^3$ and $R^4$, there may be mentioned such alkyl groups as a methyl group, an ethyl group, a n-propyl group, an isopropyl group, a n-butyl group, a n-hexyl group, a n-octyl group, a 2-ethylhexyl group, a decyl group, a dodecyl group, a tetradecyl group, a hexadecyl group and an octadecyl group; cycloalkyl groups, for example a cyclohexyl group; such aryl groups as a phenyl group, a tolyl group, a xylyl group, a biphenylyl group, a naphthyl group, an anthryl group and a phenanthryl group; and aralkyl groups, for example a benzyl group.

Specific examples of the component (E) include, but are not limited to, dimethylamine, diethylamine, di-n-propylamine, diisopropylamine, di-n-butylamine, diamylamine, di-n-hexylamine, di-n-octylamine, bis(2-ethylhexyl)amine, didecylamine, dilaurylamine, dicetylamine, distearylamine, N-methyl-N-stearylamine, T-ethyl-N-stearylamine, N-butyl-N-stearylamine, diethanolamine, pyrrolidine, piperidine, piperazine, 1-methylpiperazine, morpholine, 2-pipecoline, 4-pipecoline, 4-benzylpiperidine, 2,6-dimethylpiperidine and 3,5-dimethylpiperidine. Among these, di-n-hexylamine, di-n-octylamine, didecylamine, dilaurylamine, dicetylamine, distearylamine, N-methyl-N-stearylamine, N-ethyl-N-stearylamine and N-butyl-N-stearylamine are preferred from the adhesive properties viewpoint; di-n-octylamine, didecylamine, dilaurylamine, dicetylamine, distearylamine and N-methyl-N-stearylamine are more preferred, and distearylamine is particularly preferred. Preferred from the curability viewpoint are N-methyl-N-stearylamine, N-ethyl-N-stearylamine, pyrrolidine, piperidine, 1-methylpiperazine, morpholine, 2-pipecoline, 4-pipecoline, 4-benzylpiperidine and 3,5-dimethylpiperdine; N-methyl-N-stearylamine, pyrrolidine, piperidine, morpholine, 2-pipecoline, 4-pipecoline and 4-benzylpiperidine are more preferred, and methylstearylamine, piperidine, 4-pipecoline and 4-benzylpiperidine are particularly preferred.

The level of addition of the component (E) is preferably 0.01 to 20 parts by weight, more preferably 0.1 to 10 parts by weight, particularly preferably 0.4 to 3 parts by weight, per 100 parts by weight of the component (A). When the level of addition of a compound having an imino group and having no $-NH_2$ group nor silicon-containing group capable of crosslinking under siloxane bond formation is lower than 0.01 part by weight, the curing rate may sometimes become slow and the curing reaction may not proceed to a sufficient extent in some instances. On the other hand, when the level of addition of a compound having an imino group and having no $-NH_2$ group nor silicon-containing group capable of crosslinking under siloxane bond formation is in excess of 20 parts by weight, the pot life becomes too short and the workability tends to become deteriorated. Conversely, the curing rate becomes too slow in some cases.

<Component (G) : amino group-containing silane coupling agent>

In accordance with this aspect, the use of an amino group-containing silane coupling agent as the component (G) is preferred. The term "amino group" as used herein includes, within the meaning thereof, not only the amino group in a narrow sense as represented by $-NH_2$ ("primary amino group") but also an imino group (-NH-) resulting from substitution of a hydrocarbon group for the hydrogen atom of a primary amino group. The combined use of the component (B) and component (E) is effective in improving the adhesion properties of the one-pack curable composition according to this aspect.

The effect of the amino group-containing silane coupling agent to be added to the curable composition of this aspect is remarkably effective to improve the adhesion in the case of using the curable composition for various kinds of

adherends, e.g. inorganic substrates such as glass, aluminum, stainless steel, zinc, copper, and mortar and organic substrates such as polyvinyl chloride, acrylic polymer, polyester, polyethylene, polypropylene, and polycarbonate under non-primer condition or primer condition. In the case of being used under non-primer condition, the curable composition remarkably improves the adhesion to the various adherends.

Examples of the reactive silicon group of the component (G) may include substances having a group represented by the above-mentioned formula (2) (wherein X is a hydrolysable group.) Practical examples thereof may be those groups exemplified above for the hydrolysable group and methoxy, ethoxy, and the like groups are preferable in terms of the hydrolysis rate. The number of hydrolysable group is preferably 2 or higher and more preferably 3 or higher. Primary amino groups ($-NH_2$) are preferable due to its high effect of improving the adhesion.

Specific examples of the amino group-containing silane coupling agent may be γ -aminopropyltrimethoxysilane, γ-aminopropyltriethoxysilane, γ -aminopropyltriisopropoxysilane, γ -aminopropylmethyldimethoxysilane, γ -aminopropylmethyldiethoxysilane,γ- (2-aminoethyl)aminopropyltrimethoxysilane, γ -(2-aminoethyl)aminopropylmethyldimethoxysilane, γ -(2-aminoethyl)aminopropyltriethoxysilane, γ -(2-aminoethyl)aminopropylmethyldiethoxysilane, γ-(2-aminoethyl)aminopropyltriisopropoxysilane, γ -(6-aminohexyl)aminopropyltrimethoxysilane, 3-(N-ethylamino)-2-methylpropyltrimethoxysilane, 2-aminoethylaminomethyltrimethoxysilane, N-cyclohexylaminomethyltriethoxysilane, N-cyclohexylaminomethyldiethoxymethylsilane, γ -ureidopropyltrimethoxysilane, γ -ureidopropyltriethoxysilane, N-phenyl-γ-aminopropyltrimethoxysilane, N-phenylaminomethyltrimethoxysilane, N-benzyl-γ-aminopropyltrimethoxysilane, N-vinylbenzyl-y-aminopropyltriethoxysilane, N,N'-bis[3-(trimethoxysilyl)propyl]ethylenediamine, N-cyclohexylaminomethyltriethoxysilane, N-cyclohexylaminomethyldiethoxymethylsilane, N-phenylaminomethyltrimethoxysilane; ketimine type silanes such as N-(1,3-dimethylbutylidene)-3-(triethoxysilyl)-1-propaneamine; N-β-(carboxymethyl)aminoethyl-γ-aminopropyltrimethoxysilane and the like.

The use amount of the the component (G) is preferably in a range from 0.1 to 20 parts by weight and more preferably in a range from 0.5 to 10 parts by weight per 100 parts by weight of the polymer of the component (A) . If the addition amount of the component (G) is lower than the range, the adhesion improvement effect is insufficient in some cases. If the addition amount of the component (G) exceeds the range, the cured product tends to have low elongation and also the deep part curability tends to be worsened.

<Other additive ingredients>

While a carboxylic acid ester (D) is used as a plasticizer , another plasticizer may also be used in combination at an addition level at which the effects will not be weakened. As specific examples thereof, there may be mentioned phosphate esters such as tricresyl phosphate and tributyl phosphate; organic sulfonic acid esters; polyethers having no reactive silyl group, for example polypropylene glycol; chlorinated paraffin; hydrocarbon oils such as alkyldiphenyls and partially hydrogenated terphenyl; and process oils, among others.

However, when such a plasticizer other than the carboxylic acid ester as mentioned above is added, the curing rate tends to become retarded according to the level of addition thereof; therefore, the level of addition of the other plasticizer than the carboxylic acid ester is preferably not higher than 30 parts by weight, more preferably not higher than 10 parts by weight, still more preferably not higher than 3 parts by weight, per 100 parts by weight of the component (A); substantial absence thereof is most preferred.

Whereas a carboxylic acid metal salt (b1) and/or a carboxylic acid (b2) is used as the curing catalyst, another curing catalyst may also be used at an addition level at which the effects will not be weakened. As specific examples, there may be mentioned various carboxylic acid metal salts such as tin carboxylates, lead carboxylates, bismuth carboxylates, potassium carboxylates, calcium carboxylates, barium carboxylates, titanium carboxylates, zirconium carboxylates, hafnium carboxylates, vanadium carboxylates, manganese carboxylates, iron carboxylates, cobalt carboxylates, nickel carboxylate and cerium carboxylates; such titanium compounds as tetrabutyl titanate, tetrapropyl titanate, titanium tetrakis(acetylacetonate), bis(acetylacetonato)diisopropoxytitanium and diisopropoxytitanium bis (ethyl acetoacetate); tetravalent organotin compounds such as dibutyltin dilaurate, dibutyltin maleate, dibutyltin phthalate, dibutyltin dioctanoate, dibutyltin bis(2-ethylhexanoate), dibutyltin bis(methyl maleate), dibutyltin bis (ethyl maleate), dibutyltin bis (butyl maleate), dibutyltin bis(octyl maleate), dibutyltin bis(tridecyl maieate), dibutyltin bis(benzyl maleate), dibutyltin diacetate, dioctyltin bis(ethyl maleate), dioctyltin bis(octyl maleate), dibutyltin dimethoxide, dibutyltin bis(nonylphenoxide), dibutenyltin oxide, dibutyltin oxide, dibutyltin bis(acetylacetonate), dibutyltin bis (ethyl acetoacetonate), dibutyltin oxide-silicate compound reaction products and dibutyltin oxide-phthalate ester reaction products; organoaluminum compounds such as aluminum tris (acetylacetonate), aluminum tris (ethyl acetoacetate) and diisopropoxyaluminum ethyl acetoacetate; and zirconium compounds such as zirconium tetrakis(acetylacetonate).

Since, however, the addition of an organotin compound may increase the toxicity and/or the load on the environment according to the amount thereof as added, the organotin compound addition level is preferably not higher than 0.5 part by weight, more preferably not higher than 0.1 part by weight, still more preferably not higher than 0.01 part by weight, per 100 parts by weight of the component (A) ; absence thereof is particularly preferred.

The "organotin compound" so referred to herein is a compound having at least one carbon-tin direct bond and is represented by the general formula $R_nSnX_{4-n}$ (in which n = 1 to 4, R represents a hydrocarbon group such as an alkyl or aryl group and X is a functional group such as halogen, OH, OR' or OCOR' (R' being a hydrocarbon group such as an alkyl or aryl group).

The one-pack curable composition in accordance with this aspect is an organotin-free one-pack curable composition substantially free of any organotin compound and, from the toxicity and/or environmental load viewpoint, it is preferably an organotin-free one-pack curable composition substantially free of any organotin compound or any tin carboxylate or other tin compound, more preferably an organotin-free, metal carboxylate-free one-pack curable composition substantially free of any organotin compound and of any metal carboxylate, particularly preferably a metal catalyst-free one-pack curable composition substantially free of any of those metal element-containing curing catalysts mentioned above, including carboxylic acid metal salts, titanium compounds, organotin compounds, organoaluminum compounds and zirconium compounds.

While the component (E) is used as a silanol condensation catalyst, a primary amine or a tertiary amine may also be used at levels at which the effects will not be weakened. As specific examples, there may be mentioned primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, oleylamine, benzylamine, 3-methoxypropylamine, 3-lauryloxypropylamine, 3-dimethylaminopropylamine, 3-diethylaminopropylamine, N-methyl-1,3-propanediamine, 3-(1-piperazinyl)propylamine, 3-morpholinopropylamine, monoethanolamine, 3-hydroxypropylamine, laurylaniline, stearylaniline, xylylenediamine, ethylenediamine, hexamethylenediamine, diethylenetriamine, triethylenetetramine and cyclohexylamine; tertiary amines such as triamylamine, triallylamine, trihexylamine, trioctylamine, triphenylamine, triethanolamine, 2,4,6-tris(dimethylaminomethyl)phenol and N-methylmorpholine; and so forth.

Since, however, the addition of a primary amine may sometimes lead to curing retardation after storage according to the amount thereof added, the level of addition of a primary amine is preferably not higher than 0.3 part by weight, more preferably not higher than 0.1 part by weight, and still more preferably not higher than 0.01 part by weight, per 100 parts by weight of the component (A); substantial absence thereof is particularly preferred.

Further, since the addition of a tertiary amine may sometimes lead to diminished adhesive properties according to the amount thereof added, the level of addition of a tertiary amine is not higher than 0.3 part by weight, preferably not higher than 0.1 part by weight, more preferably not higher than 0.01 part by weight, per 100 parts by weight of the component (A); substantial absence thereof is particularly preferred.

In addition, the composition of the invention may contain silane coupling agents other than the amino group-containing silane coupling agent. Specific examples of the silane coupling agents other than the amino group-containing silane coupling agent include isocyanate group-containing silanes such as γ -isocyanatopropyltrimethoxysilane, γ-isocyanatopropyltriethoxysilane, γ-isocyanatopropylmethyldiethoxysilane, γ -isocyanatopropylmethyldimethoxysilane, trimethoxysilylmethylisocyanate, and dimethoxymethylsilylmethylisocyanate; mercapto group-containing silanes such as γ -mercaptopropyltrimethoxysilane, γ -mercaptopropyltriethoxysilane, γ-mercaptopropylmethyldimethoxysilane, γ -mercaptopropylmethyldiethoxysilane, mercaptomethyltrimethoxysilane, and mercaptomethyltriethoxysilane; epoxy group-containing silanes such as γ-glycidoxypropyltrimethoxysilane, γ -glycidoxypropyltriethoxysilane, γ -glycidoxypropylmethyldimethoxysilane, β -(3,4-epoxycyclohexyl)ethyltrimethoxysilane, and β -(3,4-epoxycyclohexyl)ethyltriethoxysilanei carboxysilanes such as β-carboxyethyltriethoxysilane, and β-carboxyethylphenylbis(2-methoxyethoxy)silane; vinyl type unsaturated group-containing silanes such as vinyltrimethoxysilane, vinyltriethoxysilane, γ -methacryloyloxypropylmethyldimethoxysilane, γ-acryloyloxypropyltriethoxysilane, and methacryloyloxymethyltrimethoxysilane; halogen-containing silanes such as γ-chloropropyltrimethoxysilane; isocyanurate silanes such as tris(3-trimethoxysilylpropyl)isocyanurate; and the like. Examples usable as the silane coupling agent may also include modified derivatives of these exemplified compounds.

Examples of the adhesion promoter other than the silane coupling agents may be, for example, epoxy resins, phenol resins, sulfur, alkyl titanates, aromatic polyisocyanate and the like. The above-exemplified adhesion promoters may be used alone or two or more of them may be used as a mixture.

To the composition in accordance with the second aspect, there may by added one or more of various additives such as silicates, fillers, organic balloons, inorganic balloons, scale-like or granular substances, thermally expansible minute hollow particles, cured sealant particles, tackifiers, solvents or diluents, physical property modifiers, thixotropic agents (antisagging agents), compounds containing an epoxy group in each molecule, photocurable substances, oxygen-curable substances, antioxidants (antiaging agents), light stabilizers, ultraviolet absorbers, epoxy resins, ketimines, phosphorus-containing plasticizers, flame retardants, curability modifiers, radical inhibitors, metal deactivating agents, antiozonants, phosphorus-containing peroxide decomposers, lubricants, pigments, blowing agents, termite control agents and antifungal agents. More specifically, those given as examples referring to the first aspect can be used. The levels of addition of the respective additives per 100 parts by weight of the component (A) are the same as the addition levels per 100 parts by weight of the component (A) in the first aspect.

The curable composition of the secopnd aspect is the one-pack curable composition which is air-tightly stored after all of the components are previously mixed and is to be cured by water in the air after application thereof. The water content in the composition is essentially required to be 2,000 ppm or lower, preferably 1,500 ppm or lower, more preferably 1,000 ppm or lower, and even more preferably 500 ppm or lower. In the case where the water content is higher than 2,000 ppm, the storage stability and the adhesion tend to be worsened.

The water content of the curable composition is measured by a quantitative water content measurement method using Karl Fischer reagent.

The quantitative water content measurement by the above-mentioned method can be carried out in the following manner. That is, about 50 ml of a dehydrating solvent mixture composed of chloroform and methanol (dehydrating solvent CM, manufactured by Mitsubishi Chemical Corporation) is fed to a titration flask in the Karl Fischer water analyzer (MK-A II, manufactured by KYOTO ELECTRONICS MANUFACTURING CO., LTD.) and then Karl Fischer reagent (Karl Fischer Reagent SS, manufactured by Mitsubishi Chemical Corporation) is added dropwise thereto until titration completion where all water is removed from the titration flask. Next, about 0.5 g of the curable composition of the invention is added to and dissolved in the above-mentioned dehydrating solvent and then, while being stirred thoroughly, titration is carried out using the Karl Fischer reagent, the titer (0.5 to 4.0 mg $H_2O$/ml) of which has previously been determined. The water content (W (ppm)) in the curable composition can be calculated according to the following equation from the titration value (B (m1)), the titer of the reagent (F (mg $H_2O$/ml)), and the amount of sampled curable composition of the invention (A (mg)):

$$W\ (ppm) = B \times F \div A \times 10^6.$$

In the case where the one-pack curable composition is prepared, since all of the components are previously mixed, it is preferable to previously dehydrate and dry the components containing water prior to use or to carry out dehydration by vacuum etc. during the components are kneaded. In the case where the composition is a powder or the like solid, the dehydration and drying method is preferably heat drying or vacuum dehydration and in the case where it is liquid, vacuum dehydration or dehydration using a synthetic zeolite, activated alumina, silica gel, burnt lime, magnesium oxide or the like is preferable. In addition to the above-mentioned dehydration and drying methods, an alkoxysilane compound such as n-propyltrimethoxysilane, vinyltrimethoxysilane, vinylmethyldimethoxysilane, methyl silicate, ethyl silicate, γ-mercaptopropylmethyldimethoxysilane, γ-mercaptopropylmethyldiethoxysilane, and γ-glycidoxypropyltrimethoxysilane may be added in order to cause reaction with water for dehydration. Alternatively, an oxazolidine compound such as 3-ethyl-2-methyl-2-(3-methylbutyl)-1,3-oxazolidine may be added and reacted with water for dehydration. Further, a small amount of an isocyanate compound may be added in order to cause reaction of its isocyanate group with water for dehydration. Addition of the alkoxysilane compound, the oxazolidine compound, and the isocyanate compound improve the storage stability.

The use amount of a dehydration agent, particularly a silicon compound reactive with water such as vinyltrimethoxysilane may be preferably in a range from 0.1 to 20 parts by weight and more preferably from 0.5 to 10 parts by weight per 100 parts by weight of the organic polymer (A) having a silicon-containing group capable of crosslinking under siloxane bond formation.

The method for producing the curable composition of the secopnd aspect is not particularly limited and a common method may be employed which involves, for example, formulating the above-mentioned components, kneading the components by a mixer, a roll, a kneader or the like at an ambient temperature or under heating condition; or dissolving the components by adding a small amount of a proper solvent for mixing.

When the curable composition of the secopnd aspect is exposed to the atmosphere, the composition forms a three-dimensional mesh structure by reaction with water and then is cured into a solid having rubber-like elasticity.

(Third Aspect)

In the third aspect, herein it is described an organotin-free curable composition which comprises an organic polymer having a silicon-containing group capable of crosslinking under siloxane bond formation and a specific silanol condensation catalyst. The term "organotin-free curable composition" as used in the third aspect means a curable composition which does not substantially contain any organotin compound.

<Component (A): organic polymer having a silicon-containing group capable of crosslinking under siloxane bond formation>

The components (A) to be used in accordance with the third aspect may be the same one as described hereinabove referring to the first aspect. The silicon-containing group capable of crosslinking under siloxane bond formation, which is to be employed, may also be the same as described hereinabove referring to the first aspect. The polyoxyalkylene polymers and (meth)acrylic acid ester polymers, among others, are particularly preferred since they are high in water vapor permeability and give one-pack compositions excellent in deep part curability and also in adhesion properties; and the polyoxyalkylene polymers are most preferred.

<Component (D): carboxylic acid ester>

In the third aspect, a carboxylic acid ester (D) is used as the plasticizer. Generally, the viscosity and slump characteristics of a curable composition as well as the mechanical characteristics, such as tensile strength and elongation, of cured products obtained by curing of the composition can be adjusted by adding a plasticizer to the curable composition. The component (D) is inexpensive, high in plasticizing efficiency, low in volatility, excellent in flexibilizing effect and excellent in low temperature fluidity, so that it is a plasticizer excellent in performance characteristics balance. It has been revealed, however, that when the carboxylic acid metal salt (b1) and/or carboxylic acid (b2) to be described later herein is used as a curing catalyst for the one-pack curable composition according to the third aspect which comprises an organic polymer (A) having a silicon-containing group capable of crosslinking under siloxane bond formation and a carboxylic acid ester (D), curing retardation occurs during storage of the one-pack curable composition under high-temperature conditions or for a prolonged period of time.

This curing retardation phenomenon is probably caused in the following manner: the transesterification reaction proceeds between the carboxylic acid ester (D) and the carboxylic acid metal salt (b1) and/or carboxylic acid (b2) during a long period of storage and, as a result, the amount of the highly active carboxylic acid in the composition is lowered.

On the other hand, it has been found that the use of a polyether plasticizer such as polypropylene glycol in the one-pack curable composition which comprises the component (A) and component (B) reduces the catalytic activity of the component (B) and thus lowers the curing rate, thus causing a problem.

Therefore, in accordance with the third aspect, the ratio of the total number of moles (b) of the carbonyl group composing the acid group in the carboxylic acid metal salt (b1) and/or carboxylic acid (b2) to the total number of moles (d) of the carbonyl group in the carboxylic acid ester (D) in the composition, namely the ratio (b/d), is adjusted to a relatively high value (not lower than 0.07), whereby in spite of the progress, to a certain extent, of the transesterification reaction during storage, the highly active carboxylic acid can remain relatively abundantly even after storage, so that an curing retardation alleviating effect can be obtained. As a result, rapid curability and storage stability can be secured simultaneously.

Specific examples of the carboxylic acid ester (D) are as already mentioned hereinabove referring to the second aspect. The carboxylic acid ester (D) to be used may comprise one single species or a combination of two or more species.

<Component (B): carboxylic acid metal salt (b1) and/or carboxylic acid (b2)>

In accordance with the third aspect as well, a carboxylic acid metal salt (b1) and/or a carboxylic acid (b2) is used as the component (B).

The carboxylic acid metal salt and carboxylic acid are not particularly restricted but may include various compounds. Specific examples of the carboxylic acid metal salt (b1) and carboxylic acid (b2) are as enumerated hereinabove.

In accordance with the third aspect, it is essential that the ratio of the total number of moles (b) of the carbonyl group composing the acid group in the component (B) to the total number of moles (d) of the carbonyl group in the carboxylic acid ester (D) in the composition, namely the ratio (b/d), be not lower than 0.07. When the value of (b/d) is lower than 0.07, the curing rate markedly lowers during storage and, in the use of the composition as a sealant or adhesive composition, for instance, no more practical storage stability will be obtained. There is a tendency for the change in curability before and after storage to be smaller as the value of (b/d) increases. From the viewpoint of curability before storage and of storage stability (curability after storage), the value of (b/d) is preferably not lower than 0.08, more preferably not lower than 0.09, particularly preferably not lower than 0.1. The upper limit to the value of (b/d) is not particularly restricted but, as a practical numerical value range, mention may be made of a range not exceeding 10.

The level of addition of the component (D) is preferably 5 to 150 parts by weight, more preferably 10 to 120 parts by weight, still more preferably 20 to 100 parts by weight, per 100 parts by weight of the polymer as the component (A), provided that the above-mentioned value of (b/d) is satisfactorily in the range of 0.07 and above. At levels lower than 5 parts by weight, the plasticizing effect tends to be insignificant and, at levels exceeding 150 parts by weight, the cured products may be insufficient in mechanical strength in some cases.

The level of addition of the component (B) is about 0.01 to 20 parts by weight, more preferably about 0.5 to 10 parts by weight, per 100 parts by weight of the component (A), provided that the above-mentioned value of (b/d) is satisfactorily in the range of 0.07 and above. When the level of addition of the component (B) is lower than that range, the curing rate may sometimes become slow and the curing reaction hardly proceeds to a sufficient extent in some

instances. On the other hand, when the level of addition of the component (B) is in excess of that range, the pot life becomes too short and, therefore, the workability may become poor and, further, the storage stability tends to become deteriorated.

On the other hand, when any appropriate level of curability cannot be obtained with the component (B) alone, an amine compound, namely the component (F), can be added as a cocatalyst or promoter. Specific examples and preferred examples of the component (F) are as given hereinabove referring to the second aspect.

The level of addition of the above-mentioned (F) component amine compound is preferably about 0.01 to 20 parts by weight, more preferably 0.1 to 5 parts by weight, per 100 parts by weight of the component (A). When the level of addition of the amine compound is lower than 0.01 part by weight, the curing rate may sometimes become slow and the curing reaction hardly proceeds to a sufficient extent in some instances. On the other hand, when the level of addition of the amine compound is in excess of 20 parts by weight, the pot life becomes too short and the workability tends to become poor and, conversely, the curing rate becomes slow in some instances.

While the carboxylic acid ester (D) is used as a plasticizer in accordance with the third aspect, another plasticizer may be used in combination at levels at which the effects will not be weakened. As specific examples, there may be mentioned the same compounds as already enumerated in the description of the second aspect, typically phosphate esters.

However, when such a plasticizer other than the carboxylic acid ester as mentioned above is added, the curing rate tends to become retarded according to the level of addition thereof; therefore, the level of addition of the other plasticizer than the carboxylic acid ester is preferably not higher than 30 parts by weight, more preferably not higher than 10 parts by weight, still more preferably not higher than 3 parts by weight, per 100 parts by weight of the component (A) ; substantial absence thereof is most preferred.

Whereas a carboxylic acid metal salt (b1) and/or a carboxylic acid (b2) is used as the curing catalyst in accordance with the third aspect, another curing catalyst may also be used at an addition level at which the effects will not be weakened. As specific examples, there may be mentioned various carboxylic acid metal salts, and the like compounds as given hereinabove referring to the second aspect.

Since, however, the addition of an organotin compound may increase the toxicity and/or the load on the environment according to the amount thereof as added, the organotin compound addition level is preferably not higher than 0.5 part by weight, more preferably not higher than 0.1 part by weight, still more preferably not higher than 0.01 part by weight, per 100 parts by weight of the component (A) ; absence thereof is particularly preferred.

The "organotin compound" so referred to in the third aspect is as described hereinabove referring to the second aspect.

The one-pack curable composition in accordance with the third aspect is an organotin-free one-pack curable composition substantially free of any organotin compound and, from the toxicity and/or environmental load viewpoint, it is preferably an organotin-free one-pack curable composition substantially free of any organotin compound or any tin carboxylate or other tin compound, more preferably an organotin-free, metal carboxylate-free one-pack curable composition substantially free of any organotin compound and of any metal carboxylate, particularly preferably a metal catalyst-free one-pack curable composition substantially free of any of those metal element-containing curing catalysts mentioned above, including carboxylic acid metal salts, titanium compounds, organotin compounds, organoaluminum compounds and zirconium compounds.

To the composition in accordance with the third aspect, there may by added one or more of various additives such as silicates, fillers, organic balloons, inorganic balloons, scale-like or granular substances, thermally expansible minute hollow particles, cured sealant particles, tackifiers, solvents or diluents, physical property modifiers, thixotropic agents (antisagging agents), compounds containing an epoxy group in each molecule, photocurable substances, oxygen-curable substances, antioxidants (antiaging agents), light stabilizers, ultraviolet absorbers, epoxy resins, ketimines, phosphorus-containing plasticizers, flame retardants, curability modifiers, radical inhibitors, metal deactivating agents, antiozonants, phosphorus-containing peroxide decomposes, lubricants, pigments, blowing agents, termite control agents and antifungal agents. More specifically, those given as examples referring to the first aspect can be used. The levels of addition of the respective additives per 100 parts by weight of the component (A) are preferably the same as the addition levels per 100 parts by weight of the component (A) in the first aspect.

The curable composition of the third aspect is the one-pack curable composition which is air-tightly stored after all of the components are previously mixed and is to be cured by water in the air after application thereof. The water content in the composition is essentially required to be 2,000 ppm or lower, preferably 1,500 ppm or lower, more preferably 1,000 ppm or lower, and even more preferably 500 ppm or lower. In the case where the water content is higher than 2,000 ppm, the storage stability and the adhesion tend to be worsened. The water content of the curable composition is measured by a quantitative water content measurement method using Karl Fischer reagent, as mentioned above.

In the case where the one-pack curable composition is prepared, since all of the components are previously mixed, it is preferable to previously dehydrate and dry the components containing water prior to use or to carry out dehydration by vacuum etc. during the components are kneaded. The dehydration and drying method includes the

methods mentioned above.

The method for producing the one-pack curable composition of the third aspect is not particularly limited and a common method may be employed which involves, for example, formulating the above-mentioned components, kneading the components by a mixer, a roll, a kneader or the like at an ambient temperature or under heating condition; or dissolving the components by adding a small amount of a proper solvent for mixing.

When the curable composition of the third aspect is exposed to the atmosphere, the composition forms a three-dimensional mesh structure by reaction with moisture and then is cured into a solid having rubber-like elasticity.

<Method of improving storage stability in accordance with fourth aspect>

In accordance with the fourth aspect, the method of improving the storage stability of a one-pack curable composition is a method which comprises the step of reducing the moisture content in a curable composition comprising

(A) an organic polymer having a silicon-containing group capable of crosslinking under siloxane bond formation,
(B) a carboxylic acid metal salt (b1) and/or a carboxylic acid (b2), and
(D) a carboxylic acid ester,

to a level not higher than 2,000 ppm and the step of adjusting the ratio of the total number of moles (b) of the carbonyl group composing the acid group in the component (B) to the total number of moles (d) of the carbonyl group in the component (D) in the composition, namely the ratio (b/d), to a level not lower than 0.07. By reducing the moisture content in the composition to 2,000 ppm or below and adjusting the ratio of the total number of moles (b) of the carbonyl group composing the acid group in the carboxylic acid metal salt (b1) and/or carboxylic acid (b2), namely the component (B), to the total number of moles (d) of the carbonyl group in the carboxylic acid ester (D), namely the ratio (b/d), to a relatively high level (not lower than 0.07), it becomes possible to retain the highly active carboxylic acid relatively abundantly after storage even in the case of progress, to a certain extent, of the transesterification reaction during storage, and thus obtain a curing retardation alleviating effect. As a result, rapid curability and storage stability can both be attained simultaneously.

The method of reducing the moisture content to a level of 2,000 ppm or below is not particularly restricted but, since in the case of a one-pack curable composition, all components/ingredients are compounded in advance, it preferably comprises the step of dehydrating/drying the moisture-containing components/ingredients in advance or the step of dehydrating the composition during compounding and kneading under reduced pressure, for instance. Suited for use as the method of dehydrating/drying is the drying method comprising heating in the case of a solid, for example a powdery substance, or the method comprising drying under reduced pressure or dehydrating using synthetic zeolite, activated alumina, silica gel, quick lime, magnesium oxide or the like in the case of a liquid. Dehydration may also be realized by incorporating a small amount of an isocyanate compound to cause the isocyanato group to react with water. Further, dehydration may also be accomplished by incorporating an oxasolidine

compound such as

3-ethyl-2-metyl-2-(3-methylbutyl)-1,3-oxazolidine for reaction with water. In addition to such dehydrating/drying methods, the addition of a lower alcohol such as methanol or ethanol; or an alkoxysilane compound such as n-propyltrimethoxysilane, vinyltrimethoxysilane, vinylmethyldimethoxysilane, methyl silicate, ethyl silicate, ☐ -mercaptopropylmethyldimethoxysilane, ☐-mercaptopropylmethyldiethoxysilane or ☐ -glycidoxypropyltrimethoxysialne contributes to further improvement in storage stability.

That the moisture content in the composition is not higher than 2, 000 ppm is essential. The moisture content is preferably not higher than 1,500 ppm, more preferably not higher than 1, 000 ppm, particularly preferably not higher than 500 ppm. When the moisture is higher than 2,000 ppm, the storage stability and/or adhesive properties tend to become unsatisfactory. The moisture content is measured by the moisture content determination method using the Karl Fischer reagent, as mentioned hereinabove.

It is also essential that the ratio of the total number of moles (b) of the carbonyl group composing the acid group in the component (B), namely the carboxylic acid metal salt (b1) and/or carboxylic acid (b2), to the total number of moles (d) of the carbonyl group in the carboxylic acid ester (D) in the composition, namely the ratio (b/d), be not lower than 0.07. When the value of (b) / (d) is smaller than 0.07, the curing rate markedly decreases during storage and, in the use of the composition as a sealant or adhesive composition, for instance, no more practical storage stability will be obtained. There is a tendency for the change in curability before and after storage to become smaller as the value of (b/d) increases. From the viewpoint of curability before storage and of storage stability (curability after storage), the value of (b/d) is preferably not lower than 0.08, more preferably not lower than 0.09, particularly preferably not lower than 0.1. The upper limit to the value of (b/d) is not particularly restricted but, as a practical numerical value range, mention may be made

of a range not exceeding 10.

(Effect of the invention)

The one-pack curable composition according to the invention is excellent in curability, adhesive properties and storage stability in spite of the use of a non-organotin catalyst. By carrying out the storage stability improving method according to the invention, it becomes possible to obtain a one-pack curable composition excellent in storage stability.

BEST MODE FOR CARRYING OUT THE INVENTION

Next, the different aspects described herein will be described more in detail with reference to Examples and Comparative Examples.

(First aspect)

(Synthesis Example 1)

Using a mixture of polyoxypropylene diol with a molecular weight of about 2,000 and polyoxypropylene triol with a molecular weight of about 3,000 at 1/1 in weight ratio as an initiator, propylene oxide was polymerized by a zinc hexacyanocobaltate glyme complex catalyst to obtain polypropylene oxide with a number average molecular weight of about 19,000 (measured by using HLC-8120 GPC manufactured by Tosoh Corporation as a solution transporting system; TSK-GEL H column manufactured by Tosoh Corporation as a column; and THF as a solvent: the molecular weight was determined on the basis of conversion into polystyrene). Successively, the terminal hydroxyl groups of the hydroxyl-terminated polypropylene oxide were converted into allyl groups by adding a methanol solution of NaOMe in 1.2 times much equivalent to the hydroxyl groups, removing methanol, and then adding allyl chloride. Accordingly, propylene oxide with a number average molecular weight of about 19,000 and terminated with allyl groups was obtained.

After 300 parts by weight of n-hexane and 300 parts by weight of water were added to and mixed, with stirring, with 100 parts by weight of the crude allyl-terminated polypropylene oxide thus obtained, water was removed by centrifugation. Then, 300 parts by weight of water was added to the obtained hexane solution with stirring, water was removed again by centrifugation and successively, hexane was removed by vacuum evaporation in order to obtain a purified allyl-terminated polypropylene oxide (hereinafter, referred to as an allyl polymer). Using 150 ppm of an isopropanol solution of a platinum-vinylsiloxane complex with 3% by weight of platinum content as a catalyst, 100 parts by weight of the obtained allyl polymer was reacted with 1.35 parts by weight of methyldimethoxysilane at 90°C for hours to obtain a methyldimethoxysilyl-terminated polypropylene oxide (A-1). It was found by $^1$H-NMR measurement (measured by using NM-LA 400 manufactured by Nippon Electric Co., Ltd., and in $CDCl_3$ solvent) that there were about 1.7 terminal methyldimethoxysilyl groups on average per one molecule.

(Synthesis Example 2)

Using polyoxypropylene diol with a molecular weight of about 2,000 as an initiator, propylene oxide was polymerized by a zinc hexacyanocobaltate glyme complex catalyst to obtain hydroxyl-terminated bi functional polypropylene oxide (polymer Q) with a number average molecular weight of about 25,500 (measured by using HLC-8120 GPC manufactured by Tosoh Corporation as a solution transporting system; TSK-GEL H column manufactured by Tosoh Corporation as a column; and THF as a solvent: the molecular weight was determined on the basis of conversion into polystyrene). To 100 parts by weight of polymer Q was added 1.8 parts by weight of □-isocyanatopropyltrimethoxysilane, and the reaction was allowed to proceed at 90ºC for 5 hours to give a trimethoxysilyl-terminated polyoxypropylene polymer (A-2). The number of terminal trimethoxysilyl groups was, on an average, 1.4 per molecule as determined by carrying out $^1$H-NMR measurement (measured by using NM-LA 400 manufactured by Nippon Electric Co., Ltd., and in $CDCl_3$ solvent) and calculating the silyl group introduction rate [(T - T')/T] where T is the relative integrated peak value for the terminal hydroxyl groups (-OH; at about 3.8 ppm) before reaction relative to the integrated peak value for the polypropylene oxide main chain methyl groups (at about 1.2 ppm) in polymer Q and T' is the relative integrated peak value after reaction on the same basis.

(Synthesis Example 3)

Using hydroxyl-terminated polypropylene oxide with a number average molecular weight of about 25,500 as obtained by polymerizing propylene oxide in the presence of a zinc hexacyanocobaltate glyme complex catalyst using polyoxypropylene glycol with a molecular weight of about 2,000 as an initiator, the same procedure as in Synthesis

Example 1 was followed to give allyl-terminated polypropylene oxide. This allyl-terminated polypropylene oxide was reacted with 0.93 part by weight of methyldimethoxysilane in the same manner as in Synthesis Example 1 to give a polyoxypropylene polymer (A-3) containing, on an average, 1.3 terminal methyldimethoxysilyl groups.

(Examples 1 to 3 and Comparative Examples 1 to 6)

A portion (100 parts by weight) of one of the polymers (A-1 to A-3) obtained in Synthesis Examples 1 to 3 as the component (A), 55 parts by weight of a (C) component alkylsulfonic acid phenyl ester (product of Bayer; Mesamoll), 55 parts by weight of diisodecyl phthalate (product of New Japan Chemical Co., Ltd.; Sansocizer DIDP) or 55 parts by weight of polypropylene glycol with a molecular weight of 3,000 (product of Takeda Chemical Industries; Actocol P23) as a plasticizer, 120 parts by weight of surface-treated colloidal calcium carbonate (product of Shiraishi Kogyo; Hakuenka CCR), 20 parts by weight of titanium oxide (product of Ishihara Sangyo; Tipaque R-820), 2 parts by weight of a thixotropic agent (product of Kusumoto Chemicals; Disparlon 6500), 1 part by weight of an ultraviolet absorber (product of Ciba Specialty Chemicals; Tinuvin 327), 1 part by weight of a light stabilizer (product of Sankyo; Sanol LS 770), 2 parts by weight of vinyltrimethoxysilane (product of Dow Corning Toray; A-171) and 3 parts by weight of N-(□-aminoethyl)-□-aminopropyltrimethoxysilane (product of Dow Corning Toray; A-1120) were kneaded together under reduced pressure conditions (0.2 mmHg; 27 Pa) at 120°C for 2 hours. Finally, (b2) component neodecanoic acid (product of Japan Epoxy Resins; Versatic 10) or (b1) component tin(II) neodecanoate (product of Nitto Kasei; Neostann U-50) and (F) component 3-diethylaminopropylamine (product of Wako Pure Chemical Industries) were added according to the formulations given in Tables 1 to 3, followed by mixing up. Each composition thus prepared was placed in a moisture-proof container (cartridge), which was then hermetically sealed. Thus was obtained a one-pack curable composition. The one-pack curable compositions prepared in this manner were measured for curability before storage and for curability after 28 days of storage at 50ºC. The curability (skinning time) evaluation was carried out in the following manner.

(Curability test)

Each curable composition was extruded out of the cartridge and filled into a mold with a thickness of about 5 mm using a spatula, and then the surface of the composition was leveled to be flat. This moment was defined as the curing starting time. The surface was touched with the spatula and the moment when the mixture was not stuck to the spatula any more was determined as the skinning time. The skinning time was determined under the condition at 23°C and 50% RH. The results are shown in Tables 1 to 3.

Tables 1 to 3 show the compositions of Examples 1 to 3 and Comparative Examples 1 to 6, and evaluation results of curability (skinning time).

Table 1

| Compositon (part by weight) | | | Example | Comp.Ex. | |
|---|---|---|---|---|---|
| | | | 1 | 1 | 2 |
| Component (A) | | A-1 | 100 | 100 | 100 |
| Plasticizer | Component(C) | Mesamoll | 55 | | |
| | Polypropylene glycol | Actocol P23 | | 55 | |
| | Phthalic acid ester | Sansocizer DIDP | | | 55 |
| Filler | | Hakuenka CCR | 120 | 120 | 120 |
| | | Tipaque R-820 | 20 | 20 | 20 |
| Thixotropic agent | | Disparbn 6500 | 2 | 2 | 2 |
| Ultraviolet absorber | | Tinuvin 327 | 1 | 1 | 1 |
| Light stabilizer | | Sanol LS 770 | 1 | 1 | 1 |
| Dehydration agent | | A-171 | 2 | 2 | 2 |
| Adhesion promoter | | A-1120 | 3 | 3 | 3 |
| Component (B) | (b1) | Versatic 10 | 2.5 | 2.5 | 2.5 |
| | (b2) | Neostann U-50 | | | |

(continued)

| Compositon (part by weight) | | | Example | Comp.Ex. | |
|---|---|---|---|---|---|
| | | | 1 | 1 | 2 |
| Amine compound | | 3-Diethylam inopropylamine | 1 | 1 | 1 |
| Curability before storage | | Skinning time (min) | 100 | 150 | 90 |
| Curability after 28 days of 50°C storage | | Skinning time (min) | 110 | 160 | 140 |

Table 2

| Composition (part by weight) | | | Example | Comp.Ex. | |
|---|---|---|---|---|---|
| | | | 2 | 3 | 4 |
| Component (A) | | A-2 | 100 | 100 | 100 |
| Plasticizer | Component(C) | Mesamoll | 55 | | |
| | Polypropylene glycol | Actocol P23 | | 55 | |
| | Phthalic acid ester | Sansocizer DIDP | | | 55 |
| Filler | | Hakuenka CCR | 120 | 120 | 120 |
| | | Tipaque R-820 | 20 | 20 | 20 |
| Thixotropic agent | | Disparlon 6500 | 2 | 2 | 2 |
| Ultraviolet absorber | | Tinuvin 327 | 1 | 1 | 1 |
| Light stabilizer | | Sanol LS 770 | 1 | 1 | 1 |
| Dehydration agent | | A-171 | 2 | 2 | 2 |
| Adhesion promoter | | A-1120 | 3 | 3 | 3 |
| Component (B) | (b2) | Versatic 10 | 2.5 | 2.5 | 2.5 |
| | (b1) | Neostann U-50 | | | |
| Amine compound | | 3-Diethylam inopropylamine | 1 | 1 | 1 |
| Curability before storage | | Skinning time (min) | 70 | 120 | 60 |
| Curability after 28 days of 50ºC storage | | Skinning time (min) | 80 | 130 | 120 |

Table 3

| Composition (part by weight) | | | Example | Comp.Ex. | |
|---|---|---|---|---|---|
| | | | 3 | 5 | 6 |
| Component (A) | | A-3 | 100 | 100 | 100 |
| Plasticizer | Component(C) | Mesamoll | 55 | | |
| | Polypropylene glycol | ActocolP23 | | 55 | |
| | Phthalic acid ester | Sansocizer DIDP | | | 55 |
| Filler | | Hakuenka CCR | 120 | 120 | 120 |
| | | Tipaque R-820 | 20 | 20 | 20 |
| Thixotropic agent | | Disparlon 6500 | 2 | 2 | 2 |
| Ultraviolet absorber | | Tinuvin 327 | 1 | 1 | 1 |
| Light stabilizer | | SanolLS 770 | 1 | 1 | 1 |

(continued)

| Composition (part by weight) | | | Example | Comp.Ex. | |
|---|---|---|---|---|---|
| | | | 3 | 5 | 6 |
| Dehydration agent | | A-171 | 2 | 2 | 2 |
| Adhesion promoter | | A-1120 | 3 | 3 | 3 |
| Component (B) | (b2) | Versatic 10 | | | |
| | (b1) | Neostann U-50 | 3.4 | 3.4 | 3.4 |
| Amine compound | | 3-Diethylam inopropylamine | 1 | 1 | 1 |
| Curability before storage | | Skirming time (min) | 150 | 250 | 150 |
| Curability after 28 days of 50ºC storage | | Skinning time (min) | 160 | 280 | 250 |

As shown in Tables 1 to 3, the use of polypropylene glycol as a plasticizer resulted in decreased initial curability prior to storage as compared with the use, as a plasticizer, of the (C) component organic sulfonic acid ester (Examples 1 to 3). On the other hand, when the phthalate ester was used as a plasticizer, the initial curing time prior to storage was comparable to or shorter than that obtained with the (C) component organic sulfonic acid ester but the decrease in curability during storage was significant and the curability after storage was low. Thus curable compositions showing both high initial stage curability and high storage stability can be obtained.

(Second aspect)

(Synthesis Example 4)

Using polyoxypropylene diol with a molecular weight of about 2,000 as an initiator, propylene oxide was polymerized by a zinc hexacyanocobaltate glyme complex catalyst to obtain polypropylene oxide with a number average molecular weight of about 16,500 (measured by using HLC-8120 GPC manufactured by Tosoh Corporation as a solution transporting system; TSK-GEL H column manufactured by Tosoh Corporation as a column; and THF as a solvent: the molecular weight was determined on the basis of conversion into polystyrene). Successively, the terminal hydroxyl groups of the hydroxyl-terminated polypropylene oxide were converted into allyl groups by adding a methanol solution of NaOMe in 1.2 times much equivalent to the hydroxyl groups, removing methanol, and then adding allyl chloride. Unreacted allyl chloride was removed by vacuum evaporation. After 300 parts by weight of n-hexane and 300 parts by weight of water were added to and mixed, with stirring, with 100 parts by weight of the crude allyl-terminated polypropylene oxide thus obtained, water was removed by centrifugation. Then, 300 parts by weight of water was added to the obtained hexane solution with stirring, water was removed again by centrifugation and successively, hexane was removed by vacuum evaporation. Accordingly, bifunctional polypropylene oxide with a number average molecular weight of about 16,500 and terminated with allyl groups was obtained.

Using 150 ppm of an isopropanol solution of a platinum-vinylsiloxane complex with 3% by weight of platinum content as a catalyst, 100 parts by weight of the obtained allyl-terminated polypropylene oxide was reacted with 1.30 parts by weight of methyldimethoxysilane at 90°C for 5 hours to obtain a methyldimethoxysilyl-terminated polypropylene oxide (A-4). It was found by $^1$H-NMR measurement (measured by using NM-LA 400 manufactured by Nippon Electric Co., Ltd. , and in $CDCl_3$ solvent) that there were 1.2 terminal methyldimethoxysilyl groups on average per one molecule.

(Synthesis Example 5)

Using hydroxyl-terminated polypropylene oxide with a number average molecular weight of about 19,000 as obtained by polymerizing propylene oxide in the presence of a zinc hexacyanocobaltate glyme complex catalyst using a mixture of polyoxypropylene diol with a molecular weight of about 2,000 and polyoxypropylene triol with a molecular weight of about 3,000 at 1/1 in weight ratio as an initiator, the same procedure as in Synthesis Example 4 was followed to give allyl-terminated polypropylene oxide. This allyl-terminated polypropylene oxide was reacted with 1.35 parts by weight of methyldimethoxysilane in the same manner as in Synthesis Example 4 to give a polyoxypropylene polymer (A-5) containing, on an average, 1.7 terminal methyldimethoxysilyl groups.

(Synthesis Example 6)

Using polyoxypropylene diol with a molecular weight of about 2,000 as an initiator, propylene oxide was polymerized by a zinc hexacyanocobaltate glyme complex catalyst to obtain hydroxyl-terminated bifunctional polypropylene oxide (polymer Q) with a number average molecular weight of about 25,500 (measured by using HLC-8120 GPC manufactured by Tosoh Corporation as a solution transporting system; TSK-GEL H column manufactured by Tosoh Corporation as a column; and THF as a solvent: the molecular weight was determined on the basis of conversion into polystyrene).

To 100 parts by weight of polymer Q was added 1.8 parts by weight of □-isocyanatopropyltrimethoxysilane, and the reaction was allowed to proceed at 90ºC for 5 hours to give a trimethoxysilyl-terminated polyoxypropylene polymer (A-6). The umber of terminal trimethoxysilyl groups was, on an average, 1.4 per molecule as determined by carrying out $^{1}$H-NMR measurement (measured by using NM-LA 400 manufactured by Nippon Electric Co., Ltd., and in $CDCl_3$ solvent) and calculating the silyl group introduction rate [(T - T')/T] where T is the relative integrated peak value for the terminal hydroxyl groups (-OH; at about 3.8 ppm) before reaction relative to the integrated peak value for the polypropylene oxide main chain methyl groups (at about 1.2 ppm) in polymer Q and T' is the relative integrated peak value after reaction on the same basis.

(Examples 4 to 11 and Comparative Examples 7 to 9)

A portion (100 parts by weight) of one of the polymers (A-4 to A-6) obtained in Synthesis Examples 4 to 6 as the component (A), 55 parts by weight of (D) component diisodecyl phthalate (product of New Japan Chemical; Sansocizer DIDP) or 55 parts by weight of polypropylene glycol with a molecular weight of 3, 000 (product of Takeda Chemical Industries; Actocol P23) as a plasticizer, 200 parts by weight of surface-treated ground calcium carbonate (product of Imerys; Carbital 110S) and 10 parts by weight of titanium oxide (product of Kerr-McGee; RFK-2) as fillers, 20 parts by weight of a thixotropic agent (product of Cray Valley; Crayvallac Super), 1 part by weight of an ultraviolet absorber (product of Ciba Specialty Chemicals; Tinuvin 327), 1 part by weight of a light stabilizer (product of Sankyo; Sanol LS 770), 2 parts by weight of vinyltrimethoxysilane (product of Dow Corning Toray; A-171) or 2 parts by weight of a tetramethoxysilane condensate (product of Fuso Chemical; Methyl Silicate 51) as a dehydration agent, and 3 parts by weight of N-(□-aminoethyl)-□-aminopropyltrimethoxysilane (product of Dow Corning Toray; A-1120) were kneaded together under reduced pressure conditions (0.2 mmHg; 27 Pa) at 120°C for 2 hours. Finally, neodecanoic acid (product of Japan Epoxy Resins; Versatic 10) or 2-ethylhexanoci acid (product of Wako Pure Chemical Industries) as (b2) component, or distearylamine (product of Kao Corp.; Farmin D86) or di-n-octylamine (product of Wake Pure Chemical Industries) as the component (E), or 3-diethylaminopropylamine (product of Wako Pure Chemical Industries) were added according to the formulations given in Table 4, followed by mixing up. Each composition thus prepared was placed in a moisture-proof container (cartridge), which was then hermetically sealed. Thus was obtained a one-pack curable composition. The one-pack curable compositions prepared in this manner were evaluated for moisture content in composition, for curability before storage and for curability after 28 days of storage at 50ºC in the following manner.

(Water content measurement)

Each composition extruded out of a cartridge was subjected to water content measurement by a Karl Fischer water analyzer (MK-AII, manufactured by Kyoto Electronics Manufacturing Co., Lad.). Water content was revealed to be not higher than 500 ppm for each of the composition.

(Curability test)

The skinning time was determined as mentioned above. The skinning time was determined under the condition at 23°C and 50% RH. The results are shown in Table 4.

Table 4 shows the compositions of Examples 4 to 11 and Comparative Examples 7 to 9, and evaluation results of curability (skinning time) before storage and after 28 days of storage at 5nºC.

Table 4

| Composition (part by weight) | | | Example | | | | | | | | Comparative Example | | |
|---|---|---|---|---|---|---|---|---|---|---|---|---|---|
| | | | 4 | 5 | 6 | 7 | 8 | 9 | 10 | 11 | 7 | 8 | 9 |
| Component(A) | | A-4 | 100 | 100 | 100 | 100 | 100 | 100 | | | 100 | 100 | 100 |
| | | A-5 | | | | | | | 100 | | | | |
| | | A-6 | | | | | | | | 100 | | | |
| Plasticizer | Component(D) | Sansocizer DIDP | 70 | 70 | 70 | 70 | 70 | 70 | 70 | 70 | 70 | | 70 |
| | Polypropylene glycol | Actocol P23 | | | | | | | | | | 70 | |
| Filler | | Carbital 110S | 200 | 200 | 200 | 200 | 200 | 200 | 200 | 200 | 200 | 200 | 200 |
| | | RFK-2 | 10 | 10 | 10 | 10 | 10 | 10 | 10 | 10 | 10 | 10 | 10 |
| Thixotropic agent | | Crayvallac Super | 20 | 20 | 20 | 20 | 20 | 20 | 20 | 20 | 20 | 20 | 20 |
| Ultraviolet absorber | | Tinuvin 327 | 1 | 1 | 1 | 1 | 1 | 1 | 1 | 1 | 1 | 1 | 1 |
| Light stabilizer | | Sanol LS 770 | 1 | 1 | 1 | 1 | 1 | 1 | 1 | 1 | 1 | 1 | 1 |
| Dehydration agent | | A-171 | 2 | 2 | 2 | | 2 | 2 | 2 | 2 | 2 | 2 | |
| | | Methyl Silicate 51 | | | | 2 | | | | | | | 2 |
| Adhesion promoter | | A-1120 | 3 | 3 | 3 | 3 | 3 | 3 | 3 | 3 | 3 | 3 | 3 |
| Component (b2) | | Versatic 10 | 7.5 | 5 | 2.5 | 2.5 | 2.5 | | 7.5 | 7.5 | 2.5 | 2.5 | 2.5 |
| | | 2-Ethylhexanoci acid | | | | | | 5 | | | | | |
| Amine compound | Component(E) | Distearylamine | 6 | 4 | 2 | 2 | | 4 | 6 | 6 | | 2 | |
| | | Di n-ocylamine | | | | | 0.93 | | | | | | |
| | 3-Diethylaminopropylamine | | | | | | | | | | 0.5 | | 0.5 |
| Organotin compound | | | 0 | 0 | 0 | 0 | 0 | 0 | 0 | 0 | 0 | 0 | 0 |
| Curability before storage | | Skinning time (min) | 115 | 220 | 510 | 390 | 450 | 350 | 75 | 40 | 220 | 800 | 120 |
| Curability after 28 days of 50°C storage | | Skinning time (min) | 135 | 230 | 425 | 330 | 400 | 340 | 82 | 45 | 600 | 800 | 510 |

As shown in Table 4, the one-pack curable compositions containing the (D) component and (b2) component in combination (Examples 4 to 11) showed good curability with insignificant changes in curability before and after storage and thus showed good storage stability as well. On the other hand, the one-pack curable compositions containing the (D) component and primary amine (3-diethylaminopropylamine) (Comparative Examples 7 and 9) showed good curability before storage but showed marked decreases in curability during storage. The one-pack curable composition containing polypropylene glycol and the (E) component in combination Comparative Example 8) showed low curability.

Then, the one-pack curable compositions of Examples 4 to 6 and Comparative Example 7 were subjected to adhesive property evaluation in the following manner.

(Adhesion test)

Each curable composition was extruded out of the cartridge in a manner that the composition was closely stack to adherends (a polycarbonate plate) to produce specimens. After the produced specimens were aged at 23°C for 7 days, a 90-degree hand peeling test was carried out for adhesion evaluation. Evaluation was carried out on the basis of failure modes as follows: the state where the cohesive failure ratio was from 50% or higher to 100% was determined as Excellent, and the state where it was from 0% to lower than 50% was determined as Poor. The results are shown in Table 5.

Table 5

| | Adherend | Example | | | Comp. Ex. |
|---|---|---|---|---|---|
| | | 4 | 5 | 6 | 7 |
| Adhesion | Polycarbonate | Excellent | Excellent | Excellent | Poor |

As shown in Table 5, the (E) component-containing one-pack curable compositions (Examples 4 to 6) showed good adhesion, while the primary amine-containing one-pack curable composition (Comparative Example 7) showed poor adhesion.

(Comparative Example 10)

A one-pack curable composition was prepared by kneading a composition having the same formulation as in Example 4 without the dehydration procedure. The moisture content in the composition was measured by the method mentioned hereinabove and found to be 3, 000 ppm. After 28 days of storage at 50ºC, the composition became gel-like, indicating poor storage stability.

(Third and fourth aspect)

(Examples 12 to 16 and Comparative Examples 11 to 13)

A portion (100 parts by weight) of one of the polymers (A-4 to A-6) obtained in Synthesis Examples 4 to 6 as the component (A), 55 parts by weight of (D) component diisodecyl phthalate (product of New Japan Chemical; Sansocizer DIDP) or 55 parts by weight of polypropylene glycol with a molecular weight of 3,000 (product of Takeda Chemical Industries; Actocol P23) as a plasticizer, 200 parts by weight of surface-treated ground calcium carbonate (product of Imerys; Carbital 110S) and 10 parts by weight of titanium oxide (product of Kerr-McGee; RFK-2) as fillers, 20 parts by weight of a thixotropic agent (product of Cray Valley; Crayvallac Super), 1 part by weight of an ultraviolet absorber (product of Ciba Specialty Chemicals; Tinuvin 327), 1 part by weight of a light stabilizer (product of Sankyo; Sanol LS 770), 2 parts by weight of vinyltrimethoxysilane (product of Dow Corning Toray; A-171) or 2 parts by weight of a tetramethoxysilane condensate (product of Fuso Chemical; Methyl Silicate 51) as a dehydration agent, and 3 parts by weight of N-(□-aminoethyl)-□-aminopropyltrimethoxysilane (product of Dow Corning Toray; A-1120) were kneaded together under reduced pressure conditions (0.2 mmHg; 27 Pa) at 120°C for 2 hours for dehydration. Finally, neodecanoic acid (product of Japan Epoxy Resins; Versatic 10) or 2-ethylhexanooi acid (product of Wako Pure Chemical Industries) as (b2) component, and 3-diethylaminopropylamine (product of Wako Pure Chemical Industries) were added according to the formulations given in Table 6, followed by mixing up. Each composition thus prepared was placed in a moisture-proof container (cartridge), which was then hermetically sealed. Thus was obtained a one-pack curable composition. The one-pack curable compositions prepared in this manner were evaluated for moisture content in composition, for curability before storage and for curability after 28 days of storage at 50ºC in the following manner.

(Water content measurement)

Each composition extruded out of a cartridge was subjected to water content measurement by a Karl Fischer water analyzer (MK-AII, manufactured by Kyoto Electronics Manufacturing Co., Ltd.). Water content was revealed to be not higher than 500 ppm for each of the composition.

(Curability test)

The skinning time was determined as mentioned above. The skinning time was determined under the condition at 23°C and 50% RH. The results are shown in Table 6.

For each of Examples 12 to 16 and Comparative Examples 11 to 13, the formulation, the ratio of the total number of moles (b) of the carbonyl group composing the acid group in the component (b2) to the total number of moles (d) of the carbonyl group in the component (D) in the composition, namely the ratio (b/d), and the results of curability (skinning time) evaluation before storage and after 28 days of storage at 50ºC are shown in Table 6.

Table 6

| Composition (part by weight) | | | Example | | | | | Comparative Example | | |
|---|---|---|---|---|---|---|---|---|---|---|
| | | | 12 | 13 | 14 | 15 | 16 | 11 | 12 | 13 |
| Component(A) | | A-4 | 100 | 100 | 100 | | | 100 | 100 | 100 |
| | | A-5 | | | | 100 | | | | |
| | | A-6 | | | | | 100 | | | |
| Plasticizer | Component(D) | Sansocizer DIDP | 70 | 30 | 70 | 70 | 70 | 70 | | 70 |
| | Polypropylene glycol | Actocol P23 | | | | | | | 70 | |
| Filler | | Carbital 110S | 200 | 200 | 200 | 200 | 200 | 200 | 200 | 200 |
| | | RFK-2 | 10 | 10 | 10 | 10 | 10 | 10 | 10 | 10 |
| Thixotropic agent | | Crayvallac Super | 20 | 20 | 20 | 20 | 20 | 20 | 20 | 20 |
| Ultraviolet absorber | | Tinuvin 327 | 1 | 1 | 1 | 1 | 1 | 1 | 1 | 1 |
| Light stabilizer | | Sanol LS 770 | 1 | 1 | 1 | 1 | 1 | 1 | 1 | 1 |
| Dehydration agent | | A-171 | 2 | 2 | 2 | 2 | 2 | 2 | 2 | |
| | | Methyl Silicate 51 | | | | | | | | 2 |
| Adhesion promoter | | A-1120 | 3 | 3 | 3 | 3 | 3 | 3 | 3 | 3 |
| Component (b2) | | Versatic 10 | 5 | 2.5 | | 5 | 5 | 2.5 | 2.5 | 2.5 |
| | | 2-Ethylhexanoci acid | | | 5 | | | | | |
| Amine compound | | 3-Diethylaminopropylamine | 1 | 0.5 | 1 | 1 | 1 | 0.5 | 0.5 | 0.5 |
| Ratio (b/d) of total mole number (b) of carbonyl group composing acid group in component (B) to total mole number (d) of carbonyl group in component (D) | | | 0.093 | 0.108 | 0.114 | 0.093 | 0.093 | 0.046 | - | 0.046 |
| Curability before storage | | Skinning time (min) | 100 | 130 | 170 | 75 | 50 | 220 | 500 | 120 |
| Curability after 28 days of 50°C storage | | Skinning time (min) | 160 | 150 | 240 | 82 | 70 | 600 | 500 | 510 |

As shown in Table 6, the one-pack curable compositions (Examples 12 to 16) in which the ratio of the total number of moles (b) of the carbonyl group composing the acid group in the component (b2) to the total number of moles (d) of the carbonyl group in the component (D), namely the ratio (b/d), was not lower than 0.07 showed insignificant changes in curability before and after storage and thus were satisfactory in storage stability. On the other hand, the one-pack curable compositions (Comparative Examples 11 and 13) in which the ratio (b/d) was lower than 0.07 showed good curability before storage but showed marked decreases in curability during storage. The one-pack curable composition (Comparative Example 12) in which polypropylene glycol was used was low in initial curability. (Comparative Example 14)

A one-pack curable composition was prepared by kneading a composition which is the same as in Example 12 without the dehydration procedure. The moisture content in the composition was measured by the method mentioned hereinabove and found to be 3,000 ppm. After 28 days of storage at 50ºC, the composition became gel-like, indicating poor storage stability.

INDUSTRIAL APPLICABILITY

The curable composition of the invention is usable for pressure sensitive adhesives, sealants for buildings and constructions, ships, automobiles and roads etc., adhesives, molding agents, materials for vibration absorption, damping materials, materials for noise reduction, foamed materials, paints, spraying materials and the like. The curable composition of the invention, is more preferable to be used as sealants or adhesives among them since the cured product obtained by curing the composition is excellent in flexibility and adhesion.

Further, the curable composition is usable for various uses, for example electric and electronic parts such as sealants for rear faces of solar cells; electrical insulating materials such as insulating coating materials for electric wires and cables; elastic adhesives, contact adhesives, spraying sealants, crack repairing materials, adhesives for tiles, powdery coating materials, casting materials, rubber materials for medical use, pressure sensitive adhesives for medical use, sealants for medical appliances, packaging materials for food, joint sealant for exterior materials such as a siding board, coating materials, primers, conductive materials for shielding electromagnetic wave, heat conductive materials, hot melt materials, electric and electronic potting agents, films, gaskets, various kinds of molding materials, rustproof and waterproof sealants for end faces (cut sections) of net glass or laminated glass, liquid sealants used in automobile parts, electric parts, various kinds of machine parts and the like, and the like. Further, since the curable composition can be closely stuck to a wide range of substrates such as glass, ceramics, wood, metals, and resin molded products by itself or with assist of a primer, it is also usable as various types of hermetically sealing compositions and adhesive compositions. Since the curable composition of the invention are excellent in recovery, durability and creep resistance, they are particularly preferred when they are used as adhesives for interior panels, adhesives for exterior panels, adhesives for tiles, adhesives for stone material lining, adhesives for ceiling finishing, adhesives for floor finishing, adhesives for wall finishing, adhesives for vehicle panels, adhesives for assembly of electric apparatus/electronic apparatus/precision apparatus, sealants for direct glazing, sealants for pair glass, sealants for SSG process, sealants for working joints of buildings and constructions, and the like.

## Claims

1. An organotin-free one-pack curable composition which comprises:

    (A) an organic polymer having a silicon-containing group capable of crosslinking by siloxane bond formation;
    (B) a carboxylic acid; and
    (D) a carboxylic acid ester,

    wherein the moisture content of the composition is not higher than 2,000 ppm, and
    the ratio of the total number of moles (b) of the carbonyl group in the acid group of component (B) to the total number of moles (d) of the carbonyl group in component (D), namely the ratio (b/d), is not lower than 0.08.

2. An organotin-free one-pack curable composition according to Claim 1, wherein the carbon atom adjacent to the carbonyl group in the acid group of the carboxylic acid (B) is a tertiary carbon or a quaternary carbon.

3. An organotin-free one-pack curable composition according to Claim 1 or Claim 2, wherein the main chain skeleton of the organic polymer (A) is a polyoxyalkylene polymer.

4. An organotin-free one-pack curable composition according to any preceding Claim, further comprising (F) an amine

compound.

5. An organotin-free one-pack curable composition according to any preceding Claim, further comprising (G) an amino group-containing silane coupling agent.

6. An organotin-free one-pack curable composition according to any preceding Claim, wherein the carboxylic acid ester (D) is a phthalic acid ester.

7. An organotin-free one-pack curable composition according to any one of Claims 4 to 6, wherein the amine compound (F) is one containing, as a substituent, a hydrocarbon group having at least one hetero atom.

8. An organotin-free one-pack curable composition according to Claim 7, wherein the amine compound (F) is one containing a hydrocarbon group having a hetero atom on the 2- to 4-position carbon atom.

9. A method of improving the storage stability of an organotin-free one-pack curable composition comprising:

(A) an organic polymer having a silicon-containing group capable of crosslinking by siloxane bond formation,
(B) a carboxylic acid, and
(D) a carboxylic acid ester,

which comprises the steps of:

reducing the moisture content in the composition to a level not higher than 2,000 ppm, and
adjusting the ratio of the total number of moles (b) of the carbonyl group in the acid group of component (B) to the total number of moles (d) of the carbonyl group in component (D) in the composition, namely the ratio (b/d), to a level not lower than 0.08.

**Patentansprüche**

1. Organozinnfreie härtbare Einkomponenten-Zusammensetzung, die umfasst:

(A) Ein organisches Polymer mit einer siliziumhaltigen Gruppe, die in der Lage ist, durch Siloxan-Bindungsbildung zu vernetzen;
(B) eine Carbonsäure und
(D) ein Carbonsäureester,

worin der Feuchtigkeitsgehalt der Zusammensetzung nicht höher als 2000 ppm liegt und
das Verhältnis der Gesamtmolzahl (b) der Carbonylgruppe in der Säuregruppe der Komponente (B) zu der Gesamtmolzahl (d) der Carbonylgrupp in der Komponente (D), also das Verhältnis (b)/(d), nicht niedriger als 0,08 liegt.

2. Organozinnfreie härtbare Einkomponenten-Zusammensetzung gemäß Anspruch 1, worin das der Carbonylgruppe in der Säuregruppe der Carbonsäure (B) benachbarte Kohlenstoffatom ein tertiärer Kohlenstoff oder ein quartärer Kohlenstoff ist.

3. Organozinnfreie härtbare Einkomponenten-Zusammensetzung gemäß Anspruch 1 oder Anspruch 2, worin das Hauptkettenskelett des organischen Polymers (A) ein Polyoxyalkylenpolymer ist.

4. Organozinnfreie härtbare Einkomponenten-Zusammensetzung gemäß einem der vorstehenden Ansprüche, ferner umfassend (F) eine Aminverbindung.

5. Organozinnfreie härtbare Einkomponenten-Zusammensetzung gemäß einem der vorstehenden Ansprüche, ferner umfassend (G) ein aminogruppenhaltiges Silan-Kupplungsmittel.

6. Organozinnfreie härtbare Einkomponenten-Zusammensetzung gemäß einem der vorstehenden Ansprüche, worin der Carbonsäureester (D) ein Phthalsäureester ist.

7. Organozinnfreie härtbare Einkomponenten-Zusammensetzung gemäß einem der Ansprüche 4 bis 6, worin die

Aminverbindung (F) eine ist, die als einen Substituenten eine Kohlenwasserstoffgruppe mit wenigstens einem Heteroatom enthält.

8. Organozinnfreie härtbare Einkomponenten-Zusammensetzung gemäß Anspruch 7, worin die Aminverbindung (F) eine ist, die eine Kohlenwasserstoffgruppe mit einem Heteroatom an dem Kohlenstoffatom in der 2- bis 4-Position enthält.

9. Verfahren zum Verbessern der Lagerstabilität einer organozinnfreien härtbaren Einkomponenten-Zusammensetzung umfassend:

   (A) Ein organisches Polymer mit einer siliziumhaltigen Gruppe, die in der Lage ist, durch Siloxan-Bindungsbildung zu vernetzen;
   (B) eine Carbonsäure und
   (D) ein Carbonsäureester,

   das die Schritte umfasst:

   Vermindern des Feuchtigkeitsgehalts in der Zusammensetzung auf ein Niveau nicht höher als 2000 ppm und Einstellen des Verhältnisses der Gesamtmolzahl (b) der Carbonylgruppe in der Säuregruppe der Komponente (B) zu der Gesamtmolzahl (d) der Carbonylgruppe in der Komponente (D) in der Zusammensetzung, also das Verhältnis (b/d), auf ein Niveau von nicht weniger als 0,08.

**Revendications**

1. Une composition durcissable à conditionnement unitaire exempte de produit organostannique qui comprend :

   (A) un polymère organique ayant un groupe contenant du silicium capable de réticulation par l'intermédiaire de la formation d'une liaison de type siloxane ;
   (B) un acide carboxylique ; et
   (D) un ester d'acide carboxylique,

   dans laquelle la teneur en humidité de la composition n'est pas supérieure à 2 000 ppm, et
   le rapport du nombre total de moles (b) du groupe carbonyle dans le groupe acide de composant (B) sur le nombre total de moles (d) du groupe carbonyle dans le composant (D), à savoir le rapport (b/d), n'est pas inférieur à 0,08.

2. Une composition durcissable à conditionnement unitaire sans produit organostannique selon la revendication 1, dans laquelle l'atome de carbone adjacent au groupe carbonyle dans le groupe acide de l'acide carboxylique (B) est un carbone tertiaire ou un carbone quaternaire.

3. Une composition durcissable à conditionnement unitaire sans produit organostannique selon la revendication 1 ou la revendication 2, dans laquelle le squelette de chaîne principale du polymère organique (A) est un polymère de polyoxyalkylène.

4. Une composition durcissable à conditionnement unitaire sans produit organostannique selon n'importe quelle revendication précédente, comprenant en outre (F) un composé amine.

5. Une composition durcissable à conditionnement unitaire sans produit organostannique selon n'importe quelle revendication précédente, comprenant en outre (G) un agent de couplage de type silane contenant un groupe amino.

6. Une composition durcissable à conditionnement unitaire sans produit organostannique selon n'importe quelle revendication précédente, dans laquelle l'ester d'acide carboxylique (D) est un ester d'acide phthalique.

7. Une composition durcissable à conditionnement unitaire sans produit organostannique selon n'importe laquelle des revendications 4 à 6, dans laquelle le composé amine (F) est un composé contenant, comme substituant, un groupe hydrocarboné ayant au moins un hétéroatome.

8. Une composition durcissable à conditionnement unitaire sans produit organostannique selon la revendication 7,

dans laquelle le composé amine (F) est un composé contenant un groupe hydrocarboné ayant un hétéroatome sur l'atome de carbone en position 2 à 4.

**9.** Une méthode consistant à améliorer la stabilité de stockage d'une composition durcissable à conditionnement unitaire sans produit organostannique comprenant :

(A) un polymère organique ayant un groupe contenant du silicium capable de réticulation par l'intermédiaire de la formation d'une liaison de type siloxane,
(B) un acide carboxylique, et
(D) un ester d'acide carboxylique,

qui comprend les étapes de :

réduction de la teneur en humidité dans la composition à un niveau non supérieur à 2 000 ppm, et
ajustement du rapport du nombre total de moles (b) du groupe de carbonyle dans le groupe acide de composant (B) sur le nombre total de moles (d) du groupe carbonyle dans le composant (D) dans la composition, à savoir le rapport (b/d), à un niveau non inférieur à 0.08.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP SHO5273998 B
- JP SHO636041 B
- JP SHO559669 B
- JP 3062626 B
- JP HEI6322251 B
- JP 2002285018 A
- JP HEI5117519 B
- JP HEI841358 B
- JP HEI539428 B
- JP 2001342363 A
- JP 2000313814 A
- JP 2003147220 A
- JP 2003206410 A
- WO 04031299 A
- WO 04031300 A
- WO 04099318 A
- JP 2000345054 A
- US 6410640 B
- WO 00056817 A
- JP HEI347825 B
- JP SHO61215623 B
- JP SHO4627250 B
- JP SHO5915336 B
- US 3278457 A
- US 3278458 A
- US 3278459 A
- US 3427256 A
- US 3427334 A
- US 3427335 A
- JP HEI10273512 B
- JP HEI11060722 B
- JP SHO4536319 B
- JP SHO4612154 B
- JP SHO50156599 B
- JP SHO546096 B
- JP SHO5513767 B
- JP SHO5513468 B
- JP SHO57164123 B
- JP HEI32450 B
- US 3632557 A
- US 4345053 A
- US 4366307 A
- US 4960844 A
- JP SHO61197631 B
- JP SHO61215622 B
- JP SHO61218632 B
- JP HEI372527 B
- JP HEI8231707 B
- JP HEI469659 B
- JP HEI7108928 B
- JP SHO63254149 B
- JP SHO6422904 B
- JP HEI1197509 B
- JP 2539445 B
- JP 2873395 B
- JP HEI753882 B
- JP HEI314068 B
- JP HEI455444 B
- JP HEI6211922 B
- JP HEI9272714 B
- JP SHO59122541 B
- JP SHO63112642 B
- JP HEI6172631 B
- JP HEI1116763 B
- JP HEI1168764 B
- JP 2000186176 A
- JP SHO5978223 B
- JP SHO59168014 B
- JP SHO60228516 B
- JP SHO60228517 B
- JP SHO58109529 B
- US 4374237 A
- JP SHO6213430 B
- US 4645816 A
- JP HEI853528 B
- EP 0676403 A
- JP HEI10204144 B
- EP 0831108 A
- JP 2003508561 A
- US 6197912 B
- JP HEI6211879 B
- US 5364955 A
- JP HEI1053637 B
- US 5756751 A
- JP HEI11100427 B
- JP 2000169544 A
- JP 2000169545 A
- JP 2002212415 A
- JP 3313360 B
- US 4067844 A
- US 3711445 A
- JP 2001323040 A
- JP HEI11279249 B
- US 5990257 A
- JP 2000119365 A
- US 6046270 A
- JP SHO5829818 B
- US 5068304 A

- JP HEI1160724 B
- JP 2002155145 A
- JP 2002249538 A
- WO 03018658 A
- WO 03059981 A
- JP 2001207157 A
- US 5364956 A
- JP 2001181532 A
- JP HEI11302527 B
- JP 2000038560 A
- JP HEI953063 B
- JP HEI10251618 B
- JP 2000154368 A
- JP 2001164237 A
- JP HEI2129262 B
- JP HEI48788 B
- JP HEI4173867 B
- JP HEI51225 B
- JP HEI7113073 B
- WO 9705201 A
- JP 2004051701 A
- JP 2004066749 A
- JP 2001115142 A
- JP HEI5117521 B
- JP HEI11241029 B
- JP HEI7258534 B
- JP HEI6279693 B
- JP HEI11349916 B
- JP 2003155389 A
- JP HEI3160053 B
- JP HEI4283259 B
- JP 9194731 A
- JP HEI9194731 B
- JP HEI570531 B
- JP HEI7103928 B
- JP 2001072854 A


**Non-patent literature cited in the description**


- **J.P. KENNEDY et al.** *J. Polymer Sci., Polymer Chem.,* 1997, vol. 15, 2843
- **MATYJASZEWSKI et al.** *J. Am. Chem. Soc.,* 1995, vol. 117, 5614
- Kankosei Jushi (Photosensitive Resins). Insatsu Gakkai Shuppanbu, 17 March 1972, 93 ff, , 106 ff, , 117 ff